# FASCICULE DE BREVET EUROPEEN

(11) **EP 3 339 401 B1**
(45) Date de publication et mention de la délivrance du brevet: **30.10.2019**
(21) Numéro de dépôt: 17206289.5
(22) Date de dépôt: 08.12.2017
(51) Int. Cl.: B01D 3/14, C10G 7/00, C10G 67/14, C10G 65/14, C10G 45/02, C10G 47/00

(54) **INSTALLATION ET PROCEDE INTEGRE D'HYDROTRAITEMENT ET D'HYDROCONVERSION AVEC FRACTIONNEMENT COMMUN**
ANLAGE UND INTEGRIERTES VERFAHREN FÜR HYDROTREATMENT UND HYDROKONVERTIERUNG MIT GEMEINSAMER FRAKTIONIERUNG
INTEGRATED FACILITY AND METHOD FOR HYDROTREATMENT AND HYDROCONVERSION WITH COMMON FRACTIONATION

(30) Priorité: 20.12.2016 FR 1662929
(43) Date de publication de la demande: 27.06.2018
(73) Titulaire: AXENS, 92508 Rueil-Malmaison Cedex (FR)
(72) Inventeur: PUPAT, Nicolas, 78800 HOUILLES (FR); LAJEUNESSE, ODILE, 92500 RUEIL-MALMAISON (FR); BONNARDOT, Jérôme, 78330 Fontenay le Fleury (FR); POURCELLY, Christelle, 78800 HOUILLES (FR); DESPRES, Benoit, 78100 ST GERMAIN EN LAYE (FR)
(74) Mandataire: IFP Energies nouvelles

(56) Documents cités:
- WO-A2-2012/134838
- US-A- 6 072 091
- US-A1- 2005 103 683
- US-A1- 2013 056 394
- US-A1- 2014 158 585

## Description

### DOMAINE DE L'INVENTION :

L'invention concerne le domaine des procédés de raffinage qui comprennent une section réactionnelle produisant de l'H₂S et/ou des légers, une section de séparation de l'effluent composée d'au moins un ballon de séparation suivie d'une section de fractionnement.

Le procédé selon l'invention consiste à fractionner les effluents d'au moins deux unités opérant des procédés différents dans une section commune sans les mélanger au préalable et en alimentant les flux produits dans les ballons séparateurs à des endroits différents dans la ou les colonne(s) de fractionnement.

Selon l'invention, le fractionnement commun est constitué d'une colonne de fractionnement principal et éventuellement d'au moins une colonne de séparation des fractions légères, dite colonne de stripage ou stripeur.

### ART ANTERIEUR :

Le brevet US 5,403,469 décrit un procédé dans lequel sont opérées en parallèle une unité d'hydrotraitement et une unité d'hydrocraquage. L'effluent de chacune des sections réactionnelles est collecté dans un séparateur commun dont la fraction liquide est envoyée dans une zone de fractionnement unique. Dans ce procédé, tous les effluents de la section réactionnelle sont donc mélangés avant d'être à nouveau séparés dans la section fractionnement. De plus, dans ce procédé le ballon séparateur étant commun aux deux unités, celles-ci voient la pression opératoire de leurs sections réactionnelles liées.

Le brevet US 5,447,621 décrit un procédé dans lequel est opéré un hydrocraquage, l'effluent hydrocraqué est distillé dans une colonne de fractionnement acide, suivi d'un hydrotraitement de la fraction diesel issue du fractionnement, l'effluent hydrotraité est envoyé en totalité vers le stripeur diesel latéral (side-stripper diesel) du fractionnement principal. Ainsi les deux unités dépendantes l'une de l'autre ne nécessitent qu'une seule section de fractionnement. Dans ce procédé, la totalité de l'effluent de l'hydrotraitement de diesel est alimenté au stripeur latéral de la colonne de fractionnement de l'hydrocraqueur Ce brevet ne décrit pas un procédé dans lequel l'alimentation du fractionnement commun se fait séparément pour les différents flux provenant des ballons séparateurs situés en aval des sections réactionnelles de ces deux unités et en amont du fractionnement ni un procédé avec une colonne de séparation traitant les fractions légères en amont de la colonne de fractionnement principal.

La demande de brevet EP2710094 A4 décrit un procédé dans lequel sont traitées deux charges hydrocarbonées dans une unité d'hydroraffinage (« hydroprocessing » en anglais) et une unité d'hydrotraitement. Une partie de l'effluent de l'unité d'hydrotraitement est mélangé avec l'effluent de l'unité d'hydroraffinage. Puis au moins une partie du mélange est envoyé à une zone de fractionnement commune. Cette demande ne décrit pas un procédé dans lequel l'alimentation du fractionnement commun se fait séparément pour les différents flux provenant des ballons séparateurs situés en aval des sections réactionnelles de ces deux unités et en amont du fractionnement.

Les brevets US 8,608,940 B2, US 8,747,653 B2, EP 1,319,701 B2, US 9,005,430 B2 et demandes de brevet US 2008/ 0093262 décrivent des procédés dans lesquels sont opérées deux unités d'hydroraffinage indépendantes ou dépendantes avec la mise en commun de leur section de compression. Cette section est la plus facile à mettre en commun puisqu'il s'agit de l'hydrogène alimentant deux unités différentes. Ces brevets ne décrivent pas un procédé dans lequel la section fractionnement de deux unités d'hydroraffinage est mise en commun et dans lequel l'alimentation du fractionnement se fait séparément pour les différents flux provenant des ballons séparateurs situés en aval des sections réactionnelles de ces deux unités et en amont du fractionnement.

La demande FR 15/63.173 déposée le 23 décembre 2015 par la Demanderesse, non publiée, décrit un procédé de raffinage qui utilise une section réactionnelle produisant de l'H2S et/ou des légers, une section de séparation composée d'au moins un ballon de séparation, au moins une colonne de stripage des fractions légères issues des ballons séparateurs et une colonne de fractionnement des produits principaux traitant la fraction de fond de la colonne de stripage et les fractions lourdes issues des ballons séparateurs, chacun des flux étant alimenté à des endroits différents dans les colonnes de fractionnement.

Le document WO 2012/134838 divulgue une installation d'hydrotraitement et d'hydroconversion de charges hydrocarbonées pour la production d'au moins du naphta et du diesel.

Aucun des documents de l'art antérieur ne propose de solution pour intégrer complètement le fractionnement entre deux unités différentes afin d'obtenir des produits de qualité optimisée et de manière flexible.

Selon l'invention, non seulement le fractionnement des deux unités est commun et l'investissement minimisé, mais l'efficacité énergétique du procédé est maximisée en alimentant séparément chacun des flux produits par les différents ballons séparateurs de chaque section de séparation de chaque unité aux endroits optimaux dans la section de fractionnement.

Selon l'invention, il devient par ailleurs possible de faire varier les points de coupes des produits finis de la deuxième unité, alors que ladite unité ne comporte pas de colonne de fractionnement principal usuellement.

### DESCRIPTION DE L'INVENTION :

### Résumé de l'invention

L'invention concerne une installation d'hydrotraitement et d'hydroconversion de charges hydrocarbonées, telle que divulguée à la revendication 1, avec section de fractionnement commun, pour la production d'au moins un des produits suivants : naphta (léger et/ou lourd), diesel, kérosène, distillat et résidu, comprenant au moins :
- une section réactionnelle R-1 comprenant au moins un réacteur d'hydroconversion,
   - un ballon séparateur chaud à haute pression B-1, alimenté par l'effluent issu de la section réactionnelle R-1 et dont l'effluent liquide est une fraction lourde de l'effluent de la section réactionnelle R-1.
   - un ballon séparateur froid à haute pression B-2, alimenté par le flux gazeux issu du ballon séparateur chaud à haute pression B-1 et dont l'effluent liquide est une fraction légère de l'effluent du réacteur R-1.
   - un ballon séparateur chaud à moyenne pression B-3, alimenté par l'effluent liquide issu du ballon séparateur chaud à haute pression B-1, et dont l'effluent liquide alimente le ballon B-5 ;
   - un ballon séparateur froid à moyenne pression B-4, alimenté par l'effluent liquide issu du ballon séparateur froid à haute pression B-2 et la fraction gazeuse issue du ballon séparateur chaud à moyenne pression B-3 et dont l'effluent liquide constitue une charge de la section de fractionnement commun ;
   - un ballon séparateur chaud à basse pression B-5, alimenté par le flux liquide issu du ballon séparateur chaud à moyenne pression B-3 et dont l'effluent liquide constitue une charge de la section de fractionnement commun.
- une section réactionnelle R10 comprenant au moins un réacteur d'hydrotraitement
   - un ballon séparateur chaud à haute pression B-10, alimenté par l'effluent issu de la section réactionnelle R-10, et dont l'effluent liquide est une fraction lourde de l'effluent de la section réactionnelle R10 ;
   - un ballon séparateur froid à haute pression B-20, alimenté par le flux gazeux éventuel issu du ballon séparateur chaud à haute pression B-10, ou directement par l'effluent issu de la section réactionnelle R-10, et dont l'effluent liquide constitue la fraction légère ou un mélange de la fraction légère et de la fraction lourde de l'effluent de la section réactionnelle R-10 qui alimente soit un ballon séparateur froid à moyenne ou basse pression soit directement la section de fractionnement commun.
   - un ballon séparateur chaud à moyenne pression B-30, dont la charge est le flux liquide issu du ballon séparateur chaud haute pression B-10,
   - un ballon séparateur froid à moyenne pression B-40, alimenté par le flux liquide issu du ballon séparateur froid à haute pression B-20 et le flux gazeux issu du ballon séparateur chaud à moyenne pression B-30, et dont l'effluent liquide constitue une charge de la section de fractionnement commun
   - un ballon séparateur chaud à basse pression B-50, alimenté par le flux liquide issu du ballon séparateur chaud à moyenne pression B-30, et dont l'effluent liquide et l'effluent vapeur constituent une ou plusieurs charges de la section de fractionnement commun
- une section de fractionnement commun comprenant au moins une colonne de fractionnement principal C-2, permettant de séparer une fraction de tête, une fraction intermédiaire et une fraction lourde, lesdites fractions comprenant les différents produits des unités,
- l'alimentation du ou des flux provenant de la première unité et l'alimentation du ou des flux provenant de la seconde unité vers ladite section de fractionnement commun étant distinctes.
La section de fractionnement commun comprend une colonne de séparation C-1, ladite colonne de séparation C-1 étant alimentée de manière séparée par :
- d'une part le flux liquide issu du ballon séparateur froid haute pression B-2, et éventuellement le flux gazeux issu du ballon séparateur chaud basse pression B-5 de la première unité ;
- d'autre part le flux liquide du ballon séparateur froid à haute pression B-20, et/ou le flux liquide du ballon séparateur froid à moyenne pression B-40, et/ou le flux gazeux issu du ballon séparateur froid à basse pression B-50, de la deuxième unité ;
la colonne de fractionnement principal C-2 étant alimentée par l'effluent liquide de ladite colonne de séparation C-1, de manière séparée par le flux liquide issu du ballon séparateur chaud basse pression B-5 de la première unité et par le flux liquide issu du ballon séparateur chaud moyenne pression B-30 de la deuxième unité.

La section de fractionnement commun peut comprendre en outre :
- au moins une colonne de stripage latéral C-4, C-5, ou C-6 alimentée par l'un des produits de la fraction intermédiaire issue de la colonne de fractionnement principal C-2 : kérosène, diesel, ou résidu, permettant de séparer une fraction gazeuse de tête et une fraction liquide de fond,
- une conduite permettant de renvoyer ladite fraction gazeuse de tête vers la colonne de fractionnement principal C-2 ;
- un échangeur E4 pour refroidir ladite fraction liquide de fond de ladite colonne de stripage latéral ;
- une conduite de sortie de ladite fraction liquide refroidie.

L'installation peut comprendre une section de traitement des gaz acides C-7 comprenant un absorbeur aux amines ou une colonne de lavage opérant à très basse pression, alimentée par au moins une partie de la fraction de tête issue de la colonne de fractionnement principal C-2 contenant les gaz acides résiduels.

L'installation peut ocmprendre une section de récupération des gaz de pétrole liquéfiés comprenant une ou plusieurs colonnes de fractionnement, alimentée par au moins une partie de la fraction de tête issue de la colonne de fractionnement principal C-2 contenant les gaz acides résiduels, ou par le flux issu de la section de traitement des gaz acides C7.

Dans une variante de l'installation selon l'invention, l'une ou l'autre des sections réactionnelles comprennent une section d'hydroisomérisation incluant un déparaffinage catalytique, comprenant au moins un lit catalytique de catalyseur comprenant une zéolithe, une fonction hydrogénante/déshydrogénante, et une fonction acide.

Dans un mode de réalisation, la première unité est une unité d'hydrocraquage et la deuxième unité une unité d'hydrodésulfuration de diesel.

Dans un autre mode de réalisation, la première unité est une unité d'hydroconversion de résidu ou de distillat ou d'huile désasphaltée en lit bouillonnant, et la deuxième unité est une unité d'hydrodésulfuration de distillat sous vide ou de diesel ou de kérosène.

De préférence, la première unité est une unité d'hydroconversion d'huile désasphaltée en lit bouillonnant et la deuxième unité est une unité d'hydrodésulfuration de distillat sous vide.

L'invention concerne également un procédé intégré d'hydrotraitement et hydroconversion de gazoles, de distillats sous vide, de résidus atmosphérique ou sous vide utilisant l'installation précédemment décrite, dans lequel la colonne de séparation C-1 fonctionne aux conditions suivantes : pression totale comprise entre 0,4 MPa et 2,0 MPa, de manière préférée entre 0,6 et 2,0 MPa, de manière très préférée entre 0,7 et 1,8 MPa.

La colonne de fractionnement C-2 fonctionne avantageusement aux conditions de pression suivantes : pression totale comprise entre 0,1MPa et 0,4 MPa, de préférence comprise entre 0,1 MPa et 0,3 MPa.

La ou les colonne(s) de stripage latéral C-4, C-5 et C-6 fonctionnent avantageusement aux conditions de pression suivantes : pression totale comprise entre 0,1 MPa et 0,4 MPa, de préférence comprise entre 0,1 MPa et 0,3 MPa.

Les conditions opératoires des réactions catalytiques d'hydrotraitement, hydroconversion et hydroisomérisation sont avantageusement : une température des sections réactionnelles en lit fixe comprise entre 200 et 460 °C, une température moyenne du lit catalytique des sections réactionnelles en lit bouillonnant comprise entre 300 et 600 °C, de manière préférée entre 350°C et 510°C, une pression totale comprise entre 1,5 MPa et 35 MPa, de préférence entre 2 et 25 MPa, une vitesse spatiale horaire globale de charge liquide pour chaque étape catalytique comprise entre 0,1 et 20 de préférence comprise entre 0,15 et 15, une quantité d'hydrogène par rapport à la charge liquide comprise entre 50 et 2500 Nm³/m³.

De manière avantageuse, la charge hydrocarbonée est choisie parmi les charges de type distillat atmosphérique (naphta, essence, kérosène et gazoles), distillat sous vide, par exemple gazoles, issus de la distillation directe du brut ou d'unités de conversion telles que le FCC, la cokéfaction (« coker » en anglais) ou la viscoréduction, comme le LCO (light cycle oil) gazole léger issu d'une unité de craquage catalytique, les charges provenant d'unités d'extraction d'aromatiques, les bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, les huiles désasphaltées, les effluents d'une unité de Fischer-Tropsch, les huiles végétales, seules ou en mélange ou les graisses animales.

De préférence, la charge hydrocarbonée est choisie parmi les gazoles, les distillats sous vide, les résidus atmosphérique ou sous vide ou les effluents d'unité Fischer-Tropsch.

### Généralités:

Par hydrocraquage ou hydroconversion, on désigne un procédé de craquage sous hydrogène, permettant généralement, dans le raffinage des pétroles bruts, de convertir un distillat sous vide en produits plus légers.

Par hydrotraitement ou hydroraffinage , on désigne l'ensemble des procédés d'épuration qui permettent d'éliminer, par action de l'hydrogène, les impuretés diverses contenues dans les coupes hydrocarbonées.

Les procédés d'hydrotraitement sont utilisés en raffinerie pour purifier des mélanges hydrocarbonés pour en faire des produits aisément valorisables. Ils sont habituellement principalement utilisés pour l'hydrodésulfuration, la déaromatisation, l'hydrodéazotation, etc de charges telles que des coupes pétrolières ou synthétiques lourdes, par exemple des kérosènes, gasoils ou distillats issus de distillation atmosphérique et sous vide afin de produire du kérosène, du gasoil ou du distillat sous vide valorisable soit dans l'unité de stockage recevant des produits de même type (« pool » en anglais), soit vers une unité aval comme le craquage catalytique. Lors de l'hydrotraitement, sont également produits en faible quantité du gaz de combustible (fuel gas selon la terminologie anglo-saxonne) et des coupes légères telles que les LPG et du naphta.

Selon l'invention, avantageusement peuvent être mis en commun les sections de fractionnement d'une unité d'hydroconversion et d'une unité d'hydrodésulfuration. Par exemple, une unité d'hydrocraquage (technologie notamment commercialisée sous le nom de Hyk ™⁾ et une unité d'hydrodésulfuration de diesel (technologie notamment commercialisée sous le nom de Prime-D ™) Le procédé d'hydroconversion peut être également une hydroconversion de résidu ou de distillat en lit bouillonnant, cette technologie est notamment commercialisée sous le nom de H-OIL ® et le procédé d'hydrodésulfuration peut être par exemple une unité d'hydrodésulfuration de distillat sous vide ou de diesel ou de kérosène.

La liste de procédés concernés par l'invention n'est pas exhaustive, l'invention concerne de manière générale les procédés de raffinage qui comprennent une section réactionnelle produisant de l'H2S et/ou des composés légers, une section de séparation de l'effluent composée d'au moins un ballon de séparation suivie d'une section de fractionnement.

Les composés légers auxquels ils est fait référence sont des composés gazeux à pression atmosphérique et température ambiante, caractérisés par des points d'ébullition allant typiquement jusqu'à environ 20°C comme par exemple, l'hydrogène, le méthane, l'éthane, le propane, le butane ou le monoxyde ou dioxyde de carbone. Cette liste n'est pas exhaustive.

### DESCRIPTION DETAILLEE DE L'INVENTION :

L'invention concerne le domaine des procédés de raffinage qui comprennent une section réactionnelle produisant de l'H2S et/ou des composés légers, une section de séparation de l'effluent composée d'au moins un ballon de séparation suivie d'une section de fractionnement. Le procédé selon l'invention consiste à fractionner les effluents d'au moins deux unités opérant des procédés différents dans une section commune sans les mélanger au préalable et en alimentant les flux produits dans les ballons séparateurs à des endroits différents dans le fractionnement commun. Selon l'invention, le fractionnement commun est constitué d'une colonne de fractionnement principal et d'éventuellement d'au moins une colonne de stripage des fractions légères, dite colonne de séparation.

L'installation selon l'invention permet avantageusement de mettre en œuvre des procédés d'hydroconversion, d'hydrotraitement, d'hydrocraquage ou d'hydro-isomérisation traitant des gazoles, des kérosènes, des distillats sous vide, des résidus atmosphériques ou sous vide, des huiles désasphaltées, des huiles végétales ou des effluents d'unité de Fischer-Tropsch. L'invention peut concerner des unités opérant avec des réacteurs à lit fixe ou en lit bouillonnant. Cette liste de procédés n'est pas exhaustive.

En effet, ces procédés comprennent une section réactionnelle produisant de l'H₂S et/ou des légers, une section de séparation composée d'au moins un ballon de séparation éventuellement suivie d'une section de fractionnement. Ladite section de fractionnement réalise principalement les objectifs suivants :
- élimination de l'H₂S et/ou des légers
- si nécessaire, le fractionnement principal des produits de l'unité
- et éventuellement la stabilisation des coupes plus légères.

Le procédé selon l'invention consiste :
- à traiter dans une section de fractionnement unique les effluents d'au moins deux unités opérant des procédés différents et produisant au moins un produit aux propriétés équivalentes ;
- à mettre en œuvre dans cette section de fractionnement :
   - au moins une colonne de fractionnement principal, au moins une colonne de séparation traitant les fractions légères pour éliminer l'H₂S et/ou les composés légers, appelée stripeur ou colonne de stabilisation quand l'unité ne produit pas d'H₂S.
   - la colonne de fractionnement principal traite l'effluent liquide de ladite colonne de séparation et les fractions lourdes issues de chacune des unités.

L'installation selon l'invention comprend :
- Au moins une première unité comprenant une section réactionnelle produisant de l'H2S et/ou des légers, une section de séparation de l'effluent composée d'au moins un ballon de séparation suivie d'une section de fractionnement commune avec au moins une autre unité. Ladite section de fractionnement commune comporte une colonne atmosphérique de fractionnement principal des produits de l'unité et une colonne de séparation des fractions légères.

Typiquement, cette unité peut être une unité d'hydrocraquage de gazoles, de distillats sous vide, de résidus atmosphérique ou sous vide ou d'effluent d'unité de Fischer-Tropsch. Cette liste n'est pas exhaustive.

La première unité selon l'invention comprend typiquement :
- une section réactionnelle comprenant au moins un réacteur R-1,
- un ballon séparateur chaud à haute pression B-1, dont la charge est l'effluent issu de R-1 et dont l'effluent liquide est une fraction lourde de l'effluent du réacteur R-1.
- un ballon séparateur froid à haute pression B-2, dont la charge est le flux gazeux issu de B-1 et dont l'effluent liquide constitue une fraction légère de l'effluent du réacteur R-1.
- optionnellement, une zone K de compression de l'effluent gazeux issu de B-2, appelé hydrogène recyclé,
- un ballon séparateur chaud à moyenne pression B-3, dont la charge est le l'effluent liquide issu de B-1,
- un ballon séparateur froid à moyenne pression B-4, dont la charge est l'effluent liquide issu de B-2 et le flux gazeux issu de B-3 et dont l'effluent liquide constitue une charge du stripeur C-1
- un ballon séparateur chaud à basse pression B-5, dont la charge est le flux liquide issu de B-3 et dont l'effluent liquide constitue une charge de la colonne de fractionnement C-2 et dont l'effluent vapeur peut être une charge de la colonne de séparation C-1 (stripeur).
- optionnellement, un four F-1 chauffant la charge de la section réactionnelle R1 ou selon certaines variantes uniquement l'hydrogène nécessaire à ladite section réactionnelle, ou encore l'hydrogène et la charge.
- optionnellement, un compresseur K-2 alimentant la section réactionnelle R1 de l'hydrogène nécessaire à ladite section réactionnelle.
- Suivant la teneur de la charge en azote et soufre, la section séparation comprend généralement également une ou plusieurs injections d'eau de lavage, par exemple en amont du ballon séparateur froid à haute pression ou entre le ballon séparateur chaud à moyenne pression et le ballon séparateur froid à moyenne pression
- Une section de fractionnement commune avec au moins une deuxième unité, telle que décrite ci-dessous.

Au moins une deuxième unité, d'un procédé de raffinage différent, comprenant une section réactionnelle produisant de l'H₂S et/ou des légers, une section de séparation de l'effluent composée d'au moins un ballon de séparation suivie d'une section de fractionnement commune avec la première unité. Selon l'invention, le procédé mis en œuvre dans la deuxième unité ne nécessite pas, lorsqu'il est mis en œuvre de manière usuelle par l'homme du métier, de colonne de fractionnement principal des produits de l'unité.

Typiquement, cette unité peut être une unité d'hydrotraitement de coupes telles que du kérosène, du diesel ou des distillats issus de la distillation directe de pétrole ou d'autres unités de raffinage. Plus généralement, cette unité peut être une unité de tout procédé comprenant une section réactionnelle produisant de l'H₂S et/ou des légers, suivie d'une section de séparation de l'effluent composée d'au moins un ballon de séparation suivie d'une section de fractionnement.

La seconde unité selon l'invention comprend typiquement :
- une section réactionnelle comprenant au moins un réacteur R-10,
- un ballon séparateur chaud à haute pression B-10, dont la charge est l'effluent issu de R-10, et dont l'effluent liquide constitue la fraction lourde de l'effluent du réacteur.
- un ballon séparateur froid à haute pression B-20, dont la charge est le flux gazeux issu de B-10, et dont l'effluent liquide constitue la fraction légère de l'effluent du réacteur.
- une zone K' de compression de l'effluent gazeux issu de B-20, appelé hydrogène recyclé,
- un ballon séparateur chaud à moyenne pression B-30, dont la charge est le flux liquide issu de B-10,
- un ballon séparateur froid à moyenne pression B-40, dont les charges sont le flux liquide issu de B-20 et le flux gazeux issus de B-30, et dont l'effluent liquide constitue une charge de la colonne de séparation C-1 (stripeur)
- un ballon séparateur chaud à basse pression B-50, dont la charge est le flux liquide issu de B-30, et dont l'effluent liquide est une charge de la colonne atmosphérique de fractionnement principal C-2 et l'effluent vapeur est une charge de la colonne de séparation C-1 (stripeur)
- Optionnellement, un four F-10 chauffant la charge de la section réactionnelle R-10 ou selon certaines variantes uniquement l'hydrogène nécessaire à ladite section réactionnelle, ou encore l'hydrogène et la charge.
- Optionnellement, un compresseur K-20 alimentant la section réactionnelle R-10 de l'hydrogène nécessaire à ladite section réactionnelle
- Suivant la teneur de la charge en azote et souffre, la section séparation comprend généralement une ou plusieurs injections d'eau de lavage, par exemple en amont du ballon séparateur froid à haute pression ou entre le ballon séparateur chaud à moyenne pression et le ballon séparateur froid à moyenne pression
- Une section de fractionnement commune avec la première unité décrite précédemment comprenant au moins une colonne de fractionnement principal et une colonne de séparation C-1 (stripeur ou colonne de stabilisation).
La section de fractionnement commune selon l'invention comprend :
- Au moins une colonne de séparation C-1 permettant l'élimination de l'H₂S et/ou des légers appelée également stripeur ou colonne de stabilisation. Ledit stripeur C-1 est alimenté d'une part par le ou les flux légers issus de la première unité : par exemple par le liquide du ballon séparateur froid à haute pression B-2 et/ou du ballon séparateur froid à moyenne pression B-4, et éventuellement le flux gazeux issus du ballon séparateur chaud à basse pression B-5. Ces flux provenant de l'effluent réactionnel de la première unité sont alimentés séparément l'un de l'autre ou en mélange. Généralement, les alimentations sont placées les unes par rapport aux autres de façon à ce que les coupes soient de plus en plus lourdes depuis le haut jusqu'en bas de la colonne.
- La colonne de séparation C-1 est alimentée d'autre part par le ou les flux légers issus des ballons de séparation opérant à basse température de la deuxième unité : par exemple, soit directement par le liquide du ballon séparateur froid à haute pression B-20, ou par le liquide du ballon séparateur froid à moyenne pression B-40, et éventuellement par le flux gazeux issu du ballon séparateur froid à basse pression B-50.

Conformément à l'invention, les flux provenant de l'effluent réactionnel de la deuxième unité sont alimentés vers la section de fractionnement commun séparément ou en mélange, mais ne sont pas mélangés avec les flux provenant de la première unité. Typiquement, les alimentations sont placées les unes par rapport aux autres de façon à ce que les coupes soient de plus en plus lourdes depuis le haut jusqu'en bas de la colonne.
- Au moins une colonne atmosphérique de fractionnement principal C-2, alimentée par le produit de fond de la colonne de séparation C-1 et par les fractions lourdes provenant des ballons séparateurs de chacune des unités
- La colonne de fractionnement principal C-2 sépare les différents produits des unités, typiquement, au moins un des produits suivants : naphta (léger et/ou lourd), diesel, kérosène, distillat et résidu.
- La colonne de fractionnement principal C-2 est alimentée d'une part par le ou les flux lourds issus de la première unité : par exemple par le flux liquide issu du ballon séparateur chaud haute pression B-1, et /ou du ballon séparateur chaud moyenne pression B-3 et/ou du ballon séparateur chaud basse pression B-5. Cette colonne est en général alimentée par un fluide de stripage en bas de la colonne, généralement de la vapeur d'eau.
- La colonne de fractionnement principal C-2 est alimentée d'autre part, et de manière séparée par rapport aux flux issus de la première unité, par le ou les flux lourds issus de la deuxième unité, c'est-à-dire les flux liquides provenant des ballons chauds si lesdits ballons existent : par exemple par le flux liquide issu du ballon séparateur chaud haute pression B-10, et /ou du ballon séparateur chaud moyenne pression B-30 et/ou du ballon séparateur chaud basse pression B-50.
- Les flux provenant de la séparation de l'effluent réactionnel de la deuxième unité sont alimentés séparément ou en mélange, mais ne sont pas mélangés avec les flux provenant de la première unité. De préférence, les alimentations sont placées les unes par rapport aux autres de façon à ce que les coupes soient de plus en plus lourdes depuis le haut jusqu'en bas de la colonne.
- Au moins une colonne de stripage latéral C-4 (side-stripper selon la terminologie anglo-saxonne) qui traite l'un des produits issu du fractionnement principal C-2 : diesel, kérosène ou résidu. Ce stripeur peut être alimenté en fluide de stripage ou rebouilli à l'aide d'un four ou d'un échangeur dont le fluide chaud peut être une utilité chaude ou un flux process chaud interne ou externe à l'unité. La vapeur de tête de cette colonne retourne vers la colonne de fractionnement principal C-2. Le fond de la colonne constitue en général un des produits finis de l'unité.
- Optionnellement, un four F-2 permet de chauffer le ou les charges alimentant la colonne de fractionnement C-2
- optionnellement, au moins une partie des flux liquides issus soit du ballon séparateur chaud haute pression B-10, soit du ballon séparateur chaud moyenne pression B-30, soit du ballon séparateur chaud basse pression B-50 de la deuxième unité alimente directement une colonne de stripage latéral du fractionnement principal.
- optionnellement au moins une partie des flux liquides issus du ballon séparateur froid à haute pression B-20 ou du ballon séparateur froid à moyenne pression B-40 alimente directement une colonne de stripage latéral du fractionnement principal.

Dans un deuxième mode de réalisation, la section de fractionnement commune ne comprend pas de colonne de séparation C1 traitant les fractions légères, mais comprend une colonne atmosphérique de fractionnement principal traitant les effluents de deux unités indépendantes l'une de l'autre. Ladite colonne est alors alimentée :
- d'une part par le ou les flux légers issus de la première unité : par exemple par le liquide du ballon séparateur froid à haute pression B-2 et/ou du ballon séparateur froid à moyenne pression B-4, et éventuellement le flux gazeux issus du ballon séparateur chaud à basse pression B-5. Ces flux provenant de l'effluent réactionnel de la première unité sont alimentés séparément les uns des autres..
- d'autre part par le ou les flux légers issus des ballons opérant à basse température de la deuxième unité : par exemple, soit directement par le liquide du ballon séparateur froid à haute pression B-20, ou par le liquide du ballon séparateur froid à moyenne pression B-40, si celui-ci existe et éventuellement par le flux gazeux issu du ballon séparateur froid à basse pression B-50, si celui-ci existe. Le ou les flux provenant de l'effluent réactionnel de la deuxième unité sont alimentés séparément et ne sont pas mélangés avec les flux provenant de la première unité. De préférence, les alimentations sont placées les unes par rapport aux autres de façon à ce que les coupes soient de plus en plus lourdes depuis le haut jusqu'en bas de la colonne.
- d'une part par le ou les flux lourds issus de la première unité : par exemple par le flux liquide issu du ballon séparateur chaud haute pression B-1, et /ou du ballon séparateur chaud moyenne pression B-3 et/ou du ballon séparateur chaud basse pression B-5. Typiquement, les alimentations sont placées les unes par rapport aux autres de façon à ce que les coupes soient de plus en plus lourdes depuis le haut jusqu'en bas de la colonne.
- d'autre part par le ou les flux lourds issus de la deuxième unité, c'est-à-dire les flux liquides provenant des ballons chauds si lesdits ballons existent : par exemple par le flux liquide issu du ballon séparateur chaud haute pression B-10, et /ou du ballon séparateur chaud moyenne pression B-30 et/ou du ballon séparateur chaud basse pression B-50.
- Les flux légers et lourds provenant de la séparation de l'effluent réactionnel de la deuxième unité sont alimentés séparément et ne sont pas mélangés avec les flux provenant de la première unité. Typiquement, les alimentations sont placées les unes par rapport aux autres de façon à ce que les coupes soient de plus en plus lourdes depuis le haut jusqu'en bas de la colonne.
- A la colonne de fractionnement principal C-2 peut être ajoutée au moins une colonne de stripage latéral C-4 (side-stripper selon la terminologie anglo-saxonne) qui traite l'un des produits issus du fractionnement principal C-2 : diesel, kérosène ou résidu. Ce stripeur peut être alimenté en fluide de stripage ou rebouillie à l'aide d'un four ou d'un échangeur dont le fluide chaud peut être une utilité chaude ou un flux process chaud interne ou externe à l'unité. La vapeur de tête de cette colonne latérale retourne vers la colonne de fractionnement principal C-2. Le fond de la colonne latérale constitue en général un des produits finis de l'unité.
- Optionnellement, un four F-2 permet de chauffer le ou les charges alimentant la colonne de fractionnement C-2
- Cette colonne est en général alimentée par un fluide de stripage en bas de la colonne, généralement de la vapeur d'eau.
- Optionnellement, au moins une partie des flux liquides issus du ballon séparateur chaud haute pression B-10, ou du ballon séparateur chaud moyenne pression B-30, ou du ballon séparateur chaud basse pression B-50 de la deuxième unité alimente directement une colonne de stripage latéral du fractionnement principal.
- optionnellement au moins une partie des flux liquides issus du ballon séparateur froid à haute pression B-20 ou du ballon séparateur froid à moyenne pression B-40 alimente directement une colonne de stripage latéral du fractionnement principal.

L'invention concerne également le procédé de mise en œuvre de ladite installation.

L'avantage du schéma de cette zone de fractionnement commune réside dans le fait que :
- le fractionnement des deux unités est commun et l'investissement minimisé
- l'efficacité énergétique du procédé est maximisée en alimentant séparément chacun des flux produits par les différents ballons séparateurs de chaque section de séparation de chaque unité ; ce qui permet à l'homme du métier d'optimiser séparément les niveaux de chaque alimentation dans la section de fractionnement.
- il est possible de faire varier les points de coupes des produits finis de la deuxième unité, notamment lorsque ladite unité ne comporte pas de colonne de fractionnement principal usuellement.

Dans le procédé et l'installation selon l'invention, les sections réactionnelles R-1 et R-10 peuvent comprendre un ou plusieurs réacteurs disposés en série ou en parallèle, par exemple deux réacteurs disposés en série.

Chaque réacteur d'une section réactionnelle comprend au moins un lit de catalyseur.

Le catalyseur peut être mis en œuvre en lit fixe ou en lit expansé, ou encore en lit bouillonnant. Dans le cas d'un catalyseur mis en œuvre en lit fixe, il est possible de disposer plusieurs lits de catalyseurs dans au moins un réacteur.

Tout catalyseur connu de l'homme du métier peut être utilisé dans le procédé selon l'invention, par exemple un catalyseur comprenant au moins un élément choisi parmi les éléments du Groupe VIII de la classification périodique (groupes 8, 9 et 10 de la nouvelle classification périodique) et éventuellement au moins un élément choisi parmi les éléments du Groupe VIB de la classification périodique (groupe 6 de la nouvelle classification périodique).

Pour la mise en œuvre du procédé selon l'invention, on peut utiliser un catalyseur classique d'hydroconversion comprenant, sur un support amorphe, au moins un métal ou compose de métal ayant une fonction hydro-déshydrogénante. Ce catalyseur peut être un catalyseur comprenant des métaux du groupe VIII, par exemple du nickel et/ou du cobalt, le plus souvent en association avec au moins un métal du groupe VIB, par exemple du molybdène et/ou du tungstène. On peut par exemple employer un catalyseur comprenant de 0,5 à 10 %poids de nickel (exprime en oxyde de nickel NiO) et de 1 à 30 %poids de molybdène, de préférence de 5 à 20 % poids de molybdène (exprime en oxyde de molybdène MoO3) sur un support minéral amorphe. La teneur totale en oxydes de métaux des groupes VI et VIII dans le catalyseur est généralement comprise entre 5 et 40 percent poids et préférentiellement entre 7 et 30 % poids. Le rapport pondéral (exprime sur la base des oxydes métalliques) entre métal (métaux) du groupe VI et métal (métaux) du groupe VIII est, en général, d'environ 20 à environ 1, et le plus souvent d'environ 10 à environ 2. Le support est, par exemple, choisi dans le groupe forme par l'alumine, la silice, les silices-alumines, la magnésie, les argiles et les mélanges d'au moins deux de ces minéraux. Ce support peut également renfermer d'autres composes et par exemple, des oxydes choisis parmi l'oxyde de bore, la zircone, l'oxyde de titane, l'anhydride phosphorique. On utilise le plus souvent un support d'alumine et préférentiellement de l'alumine η ou y. Le catalyseur peut également contenir un élément promoteur tel que du phosphore et/ou du bore. Cet élément peut avoir été introduit dans la matrice ou de préférence avoir été déposé sur le support. Du silicium peut également être déposé sur le support, seul ou avec le phosphore et/ou le bore. De manière préférée, les catalyseurs contiennent du silicium déposé sur un support tel que l'alumine, éventuellement avec du phosphore et/ou du bore déposé(s) sur le support, et contenant aussi au moins un métal du groupe VIII (Ni, Co) et au moins un métal du groupe VIB (Mo,W). La concentration en ledit élément est habituellement inférieure à environ 20 % poids (sur la base oxyde) et le plus souvent inférieure à environ 10 %. La concentration en trioxyde de bore (B2O3) est habituellement d'environ 0 à environ 10 % poids. Un autre catalyseur est une silice-alumine comprenant au moins un métal du groupe VIII et au moins un métal du groupe VIB. Un autre type de catalyseur utilisable est un catalyseur contenant au moins une matrice, au moins une zéolithe Y et au moins un métal déshydrogénant. Les matrices, métaux, éléments additionnels décrits précédemment peuvent également entrer dans la composition de ce catalyseur. Des zéolithes Y avantageuses sont décrites dans les demandes de brevet WO00/71641, EP-911 077 ainsi que US 4,738,940 et 4,738,941. Certains composés ayant un caractère basique, comme l'azote basique, sont bien connus pour réduire significativement l'activité craquante des catalyseurs acides tels que les silices-alumines ou les zéolithes. Un autre type de catalyseur utilisable est un catalyseur contenant des métaux nobles tels que le Platine ou le Palladium par exemple.

Le type d'hydrotraitement requispour, par exemple, former un produit de type carburant diesel, peut varier en fonction du type de charge d'alimentation de distillat. Pour certains types d'alimentations, la formation d'un produit diesel convenable peut exiger uniquement un hydrotraitement ou d'hydrocraquage de la charge afin de réduire la teneur en soufre et azote dans le carburant diesel produit. D'autres charges n'auront pas des propriétés d'écoulement à froid acceptables et il faudra également un déparaffinage pour obtenir le diesel souhaité.

Ainsi, l'une ou l'autre des sections réactionnelles peuvent également comprendre une section d'hydroisomérisation incluant le déparaffinage catalytique. L'hydroisomérisation consiste à convertir au moins 10%, plus précisément au moins 50%, plus particulièrement de 10 à 90% des paraffines linéaires (n-paraffines) en paraffines branchées (i-paraffines) afin d'améliorer les propriétés à froid de la charge : typiquement pour obtenir un point de trouble de 0°C (32°F) ou moins, un point d'écoulement de 0°C (32°F) ou moins, et /ou une température limite de filtrabilité (cold filter plugging point (CFPP), selon la terminologie anglo-saxonne) de 0°C (32°F) ou moins.

Pour mettre en œuvre les réactions d'hydro isomérisation, on peut utiliser un catalyseur comprenant une zéolithe, une fonction hydrogénante/déshydrogénante, et une fonction acide. Sous certaines formes, le catalyseur peut inclure au moins un métal du groupe VIII tel qu'un métal noble (par exemple, platine ou palladium). Sous d'autres formes, le catalyseur peut aussi inclure une silice alumine phosphatée ou une zéolithe alumino silicatée.

Les conditions opératoires de ces sections réactionnelles d'hydrotraitement ou d'hydroconversion ou d'hydroisomérisation R-1 et R-10 sont bien connues de l'homme du métier : La température des sections réactionnelles en lit fixe est typiquement comprise entre 200 et 460 °C. La température moyenne du lit catalytique (c'est-à-dire la moyenne arithmétique des mesures de température dans le lit catalytique) des sections réactionnelles en lit bouillonnant est typiquement comprise entre 300 et 600 °C, de manière préférée entre 350°C et 510°C.

La pression totale est généralement comprise entre 1,5 MPa et 35 MPa, de préférence entre 2 et 25 MPa,
- La vitesse spatiale horaire globale de charge liquide pour chaque étape catalytique est généralement comprise entre 0,1 et 20 et généralement entre 0,15 et 15.
- La quantité d'hydrogène par rapport à la charge liquide est généralement comprise entre 50 et 2500 Nm³/m³.
- La pureté de l'hydrogène utilisé dans le procédé selon l'invention est généralement comprise entre 50 et 100% volume.

La section réactionnelle de l'unité d'hydroconversion R-1 peut être mise en œuvre en une étape, ou en une étape avec recyclage d'une partie du produit non converti, ou en plusieurs étapes, chaque étape ayant un ou plusieurs réacteurs et traitant une partie du produit non converti. Lorsque la section réactionnelle est mise en œuvre en deux étapes, la section de séparation est en général commune, au moins en partie, ainsi que la section de fractionnement.

L'effluent de la section réactionnelle R-1 ou R-10 est constitué d'une coupe hydrocarbonée, généralement en phase mixte, comprenant des gaz issus du craquage, et notamment de l'H₂S et du NH₃ issus des réactions de la section réactionnelle, proportionnément à la teneur en soufre et azote contenus dans la charge, éventuellement du CO₂ et d'autres gaz, des coupes légères tel que les LPG provenant des réactions secondaires, et au moins du naphta, et éventuellement les coupes hydrocarbonées suivantes, diesel, kérosène, résidu non converti, etc., en fonction de la nature de la charge et du type de réaction dans R-1 ou R-10.

La colonne de séparation C-1, appelée stripeur ou parfois colonne de stabilisation, vise à éliminer les gaz issus du craquage (appelés généralement gaz acides), et notamment l'H₂S et/ou les légers, issus des réactions de la section réactionnelle. Cette colonne est de préférence strippée au moyen de tout gaz de stripage tel que par exemple un gaz contenant de l'hydrogène ou de la vapeur. De préférence on utilise de la vapeur pour réaliser ledit stripage. Dans une variante de l'invention la colonne de séparation C-1 pourra être rebouillie à l'aide d'un four ou d'un échangeur dont le flux chaud peut être une utilité chaude ou un flux process interne ou externe à l'unité. La pression totale est typiquement comprise entre 0,4 MPa et 2,0 MPa, généralement entre 0,6 et 2,0 MPa, de préférence entre 0,7 et 1,8 MPa. Avantageusement, la pression de cette colonne de séparation est suffisamment élevée pour que les gaz issus de cette séparation, préalablement purifiés de l'H₂S qu'ils contiendraient, puissent être réinjectés dans le réseau de gaz combustible du site.

La colonne atmosphérique de fractionnement principal C-2 est également de préférence alimentée au moyen de tout gaz de stripage, de préférence de la vapeur. La pression totale est généralement comprise entre 0,1MPa et 0,4 MPa, de préférence entre 0,1 MPa et 0,3 MPa. Le point de coupe du résidu atmosphérique est réglé typiquement entre 300°C et 400°C, préférablement entre 340°C et 380°C. Les coupes soutirées de la colonne sont typiquement le diesel, le kérosène et le naphta.

La ou les colonne(s) de stripage latéral C-4, C-5 et C-6 fonctionnent aux conditions de pression suivantes : pression totale comprise entre 0,1 MPa et 0,4 MPa, de préférence comprise entre 0,1 MPa et 0,3 MPa.

La fraction de tête de la colonne de fractionnement C-2 contient les gaz acides résiduels qui sont comprimés dans le compresseur K-3 avant export vers le traitement des gaz acides (généralement un lavage aux amines ou une colonne de lavage). Cette fraction est ensuite dirigée vers un réseau gaz combustible.

Selon une variante de l'invention, au moins une partie de la fraction de tête de la colonne C-2 contenant les gaz acides résiduels est envoyée vers un absorbeur aux amines ou une colonne de lavage C-7 opérant à très basse pression, afin d'éliminer au moins une partie de l'H₂S. Cette partie de la fraction de tête peut alors être utilisée de façon minoritaire comme combustible dans les fours R-1 ou R-10 des sections réactionnelles.

Selon une autre variante de l'invention, les gaz résiduels peuvent être dirigés, après lavage aux amines éventuellement, vers une section de récupération des gaz de pétrole liquéfiés (abrégés en GPL en français ou LPG dans les autres pays) constituée généralement de plusieurs colonnes de fractionnement, par exemple deéthaniseur et débutaniseur, cette section étant nommée « gas plant » selon la terminologie anglo-saxonne.

Les ballons séparateurs chauds à haute pression B-1 et B-10 sont opérés à une pression légèrement inférieure, par exemple une pression plus basse de 0,1 MPa à 1,0 MPa que celle du réacteur R-1 et R-10, de manière préférée à une pression comprise entre 1,4 et 35 MPa, de préférence entre 1,9 et 25 MPa. La température du ballon séparateur chaud est généralement comprise entre 200°C et 450°C, de préférence entre 250°C et 380°C et de manière très préférée entre 250°C et 360°C.

Les ballons séparateurs froids à haute pression B-2 et B-20, dont la charge est le flux gazeux issu du ballon séparateur chaud B-1 et B-10 respectivement, sont opérés à une pression légèrement inférieure à B-1 et B-10 respectivement, par exemple une pression plus basse de plus basse de 0,01 MPa à 1,0 MPa que celle de B-1 et B-10, , de manière préférée à une pression comprise entre 1,3 et 35 MPa, de préférence entre 1,9 et 25 MPa.

Les effluent gazeux issus de B-2 et B-20 respectivement, appelés hydrogène recyclé, sont éventuellement lavés dans la colonne C-3 et C-30 respectivement, puis comprimés dans les compresseurs K-1 et K-10 respectivement.

La température des ballons séparateurs froid à haute pression B-2 et B-20 est généralement la plus basse possible compte tenu des moyens de refroidissement disponibles sur le site. Ceci de façon à maximiser la pureté de l'hydrogène recyclé, de préférence entre 20 et 100°C.

Selon une variante de l'invention, les liquides issus des ballons séparateurs froids haute pression B-2 et B-20 sont détendus dans une vanne ou une turbine et dirigés dans les ballons séparateurs froids à moyenne pression B-4 et B-40 respectivement. La pression totale de ces derniers est préférentiellement celle requise pour récupérer de façon efficace l'hydrogène compris dans la fraction gazeuse séparée dans ces ballons. Cette récupération de l'hydrogène est de préférence réalisée dans une unité d'adsorption par inversion de pression. La pression des ballons B-4 et B-40 est généralement comprise entre 1,0MPa et 5,0 MPa, de préférence comprise entre 1,5 MPa et 3,5 MPa. Toujours selon une variante de l'invention le flux liquide issu des ballons séparateurs chauds à haute pression B-1 et B-10 est dirigé via une vanne ou une turbine dans les ballons séparateurs chauds à moyenne pression B-3 et B-30 respectivement. La pression de ces derniers est choisie de façon à pouvoir alimenter les ballons séparateurs froids à moyenne pression B-4 et B-40 respectivement avec le flux gazeux séparé dans les ballons séparateurs chauds à haute pression B-3 et B-30 respectivement.

Selon une variante préférée, une partie du liquide issu des ballons séparateurs froids à moyenne pression B-4 et/ou de B-40, peut être réinjectée dans B-2 et/ou B-20 respectivement afin de favoriser la dissolution des hydrocarbures légers dans ces derniers et maximiser la pureté en hydrogène du gaz recycle de la section réactionnelle.

Optionnellement, le flux liquide issu des ballons séparateurs chauds à moyenne pression B-3 et/ou B-30 est détendu et dirigé vers les ballons séparateurs chauds à basse pression B-5 et/ou B-50 respectivement. La pression est choisie suffisamment élevée, afin que l'effluent gazeux issus de de cette séparation puisse être dirigé soit vers la colonne de séparation C-1, soit préalablement purifié de l'H₂S qu'il contient éventuellement, vers le réseau de gaz combustible du site. La pression totale de ces ballons est typiquement comprise entre environ 0,2 MPa et environ 2,5 MPa, généralement entre 0,3 et 2,0 MPa, de préférence entre 0,4 et 1,8 MPa.

### Charges :

Des charges hydrocarbonées très variées peuvent être traitées dans les unités concernées par l'invention. Lesdites charges peuvent être d'origine pétrolière ou synthétiques de source minérale ou biologique. La gamme s'étend du naphta au résidu sous-vide en passant par toutes les coupes intermédiaires, voire un mélange de différentes coupes.

En général, les charges contiennent 5% ou moins de composés dont le point d'ébullition est inférieur à 120°C (c'est-à-dire que 95% pourcent des composés présents dans la charge ont un point d'ébullition supérieur à 120°C).

Dans le cas du naphta, le point d'ébullition T5 est généralement d'environ 120°C et dans le cas de diesel d'environ 150°C. Dans le cas du résidu atmosphérique, le point d'ébullition T5 est typiquement supérieur à 300°C, préférablement entre 340°C et 380°C.

Dans le cas du résidu sous-vide, le point d'ébullition T5 est typiquement entre 450°C et 600°C, préférablement entre 500°C et 550°C. Le distillat sous vide léger (Light Vacum gas oil LVGO selon la terminologie anglo-saxonne LVGO) est caractérisé par un intervalle de distillation compris entre 300°C et 430°C, préférablement entre 340°C et 400°C. Le distillat sous vide lourd (Heavy Vacum gas oil HVGO selon la terminologie anglo-saxonne) est caractérisé par un intervalle de distillation compris entre 400°C et 600°C, préférablement entre 440°C et 550°C.

Les charges utilisables sont donc dans une large gamme de points d'ébullition.

Les charges hydrocarbonées peuvent être de type distillat atmosphérique (naphta, essence, kérosène et gazoles), distillat sous vide, par exemple gazoles, issus de la distillation directe du brut ou d'unités de conversion telles que le FCC, cokéfaction ou la viscoréduction, comme le LCO (light cycle oil) gazole léger issu d'une unité de craquage catalytique, mais aussi peuvent être des charges provenant d'unités d'extraction d'aromatiques, des bases d'huile lubrifiante ou issues du déparaffinage au solvant des bases d'huile lubrifiante, ou encore des distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, ou encore la charge peut être une huile désasphaltée, des effluents d'une unité de Fischer-Tropsch ou encore tout mélange des charges précédemment citées. La charge hydrocarbonée peut être également des huiles végétales ou des graisses animales. La liste ci- dessus n'est pas limitative.

Les charges des unités d'hydroconversion contiennent généralement au moins 10% volume, généralement au moins 20 % volume, et souvent au moins 80% volume de composés bouillant au-dessus de 340°C.

La teneur en azote des charges traitées dans les procédés d'hydroconversion est usuellement supérieure à 500 ppm poids, généralement comprise entre 500 et 10000 ppm poids.

La teneur en soufre des charges traitées dans les procédés d'hydroconversion est usuellement comprise entre 0,01 et 6% poids, de manière générale comprise entre 0,2 et 5% poids. La charge peut éventuellement contenir des métaux. La teneur cumulée en nickel et vanadium des charges traitées dans les procédés d'hydroconversion est de préférence inférieure à 10 ppm poids, de manière préférée inférieure à 5 ppm poids et de manière encore plus préférée inférieure à 2 ppm poids. La teneur en asphaltènes est généralement inférieure à 3000 ppm poids.

Les charges des unités d'hydrotraitement contiennent généralement au moins 10% volume, généralement au moins 20 % volume, et souvent au moins 80% volume de composés bouillant au-dessus de 150°C.

La teneur en azote des charges traitées dans les procédés d'hydrotraitement est usuellement supérieure à 100 ppm poids, généralement comprise entre 100 et 10 000 ppm poids.

La teneur en soufre des charges traitées dans les procédés d'hydrotraitement est usuellement comprise entre 0,01 et 5% poids. La charge peut éventuellement contenir des métaux. La teneur cumulée en nickel et vanadium des charges traitées dans les procédés d'hydrotraitement est de préférence inférieure à 300 ppm poids. La teneur en asphaltènes est généralement inférieure à 15 % poids.

### AVANTAGES DE L'INVENTION

Dans le procédé selon l'invention, de manière avantageuse par rapport aux procédés connus de l'art antérieur :
- le nombre de colonnes permettant le fractionnement des produits d'au moins deux sections réactionnelles est réduit avec la mise en commun des fractionnements ;
   - les séparations des produits issus de l'unité n'ayant pas de fractionnement principal sont améliorées, notamment, la séparation entre les sous-produits et le produit principal, par exemple, la séparation entre le diesel et le kérosène ;
   - le point de coupe de chaque produit intermédiaire peut être modifié dans le fractionnement commun. Ainsi suivant les saisons, il n'est pas nécessaire d'ajuster le point de coupe et la capacité de la charge d'une unité qui ne disposait pas d'un fractionnement dédié à la coupe ou les coupes intermédiaires suivant l'art antérieur.
   - La présence d'au moins une colonne de stripage latéral permet par ailleurs d'ajuster les propriétés des produits intermédiaires issus du fractionnement principal.

L'installation et le procédé selon l'invention permettent ainsi d'obtenir une grande flexibilité dans les points de coupe pour les produits intermédiaires, par rapport aux unités prises de manière indépendante.

Le procédé selon l'invention permet notamment de :
- produire une quantité équivalente de produits valorisables tout en ayant la possibilité de faire varier les points de coupes de produits finis.
- maximiser l'efficacité énergétique du procédé en alimentant séparément chacun des flux produits par les différents ballons séparateurs de chaque unité à l'endroit ou aux endroits adéquats dans la section de fractionnement.

La mise en œuvre de l'installation selon l'invention permet par ailleurs de réduire ainsi le nombre d'équipements lors de la construction.

En effet, l'invention est avantageusement mise en œuvre pour les unités dépourvues habituellement de colonne permettant le fractionnement principal des produits de l'unité. Selon l'invention, les flux issus des ballons séparateurs de ces unités peuvent être traités dans la colonne de fractionnement des produits principaux commune avec une autre unité, permettant ainsi, sans investissements supplémentaires de faire varier leurs points de coupes.

Par rapport au schéma de raffinerie usuel, le procédé selon l'invention permet d'obtenir le même rendement en coupes hydrocarbonées tout en minimisant les coûts d'investissement.

Les propriétés des produits finis de chacune des unités doivent préférentiellement être équivalentes c'est-à-dire qu'ils doivent avoir la même destination : typiquement soit directement la valorisation en produit fini dans le même pool, soit le traitement dans une même unité de raffinage en aval, soit le recyclage au même endroit.

### LISTE DES FIGURES

Figure 1 : Schéma d'une unité d'hydrocraquage selon l'art antérieur
Figure 2 : Schéma d'une unité d'hydrotraitement de diesel selon l'art antérieur
Figure 3 : Installation selon l'invention avec mise en commun du fractionnement des unités d'hydrocraquage et d'hydrotraitement de diesel et section de fractionnement commune avec colonne de séparation C1 traitant les fractions légères.
Figure 4 : Installation avec mise en commun du fractionnement des unités d'hydrocraquage et d'hydrotraitement de diesel et section de fractionnement commune sans colonne de séparation C1 traitant les fractions légères.

### DESCRIPTION DES FIGURES :

### Figure 1 :

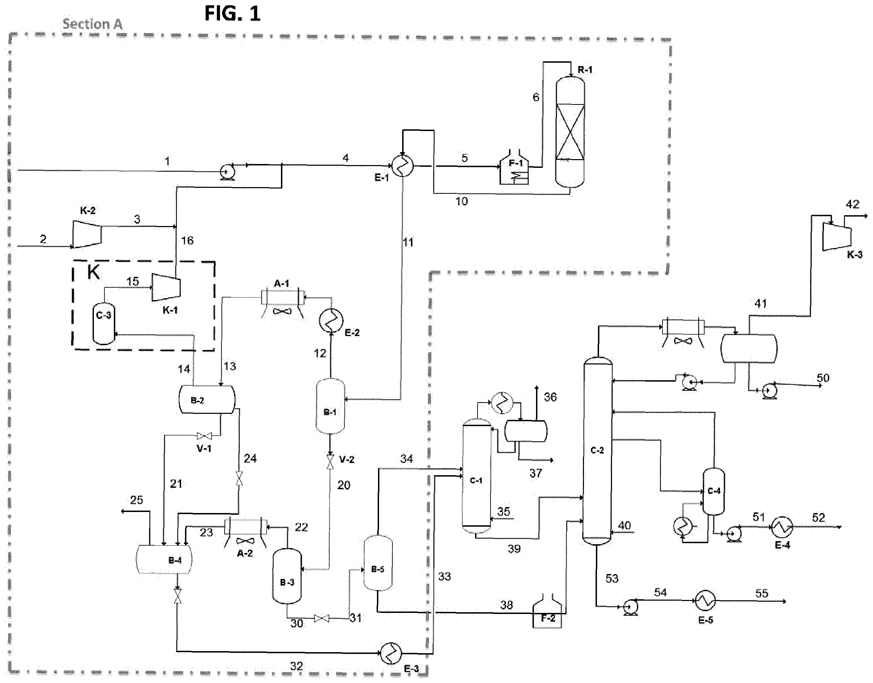

La figure 1 illustre une unité d'hydrocraquage mis en œuvre selon l'art antérieur.

La charge 1 composée d'hydrocarbures d'origine pétrolière ou d'hydrocarbures synthétiques de source minérale ou biologique est mélangée à de l'hydrogène puis est envoyée dans une section d'hydrocraquage. Cette section peut comporter un ou plusieurs réacteurs en lit fixe ou en lit bouillonnant. Chaque réacteur peut comprendre un ou plusieurs lits de catalyseurs réalisant l'hydrocraquage des hydrocarbures de la charge en hydrocarbures plus légers.

L'appoint d'hydrogène est alimenté via la ligne 2 et le compresseur K-2 puis la ligne 3, et mélangé avec l'hydrogène recyclé provenant du compresseur K-1 par la ligne 16 avant d'être mélangé à la charge 1.

Le mélange est admis dans un échangeur charge-effluent (E-1) via la ligne 4. L'échangeur E-1 permet de préchauffer la charge au moyen de l'effluent du réacteur d'hydrocraquage R-1. Après cet échange, la charge est amenée via la ligne 5 dans un four F-1 permettant d'atteindre le niveau de température nécessaire à la réaction d'hydrocraquage, puis la charge chaude est envoyée, via la ligne 6, dans au moins un réacteur R-1 comprenant par exemple un catalyseur d'hydroraffinage ou d'hydrocraquage. L'effluent de la section réactionnelle à la sortie du réacteur R-1 est envoyé vers l'échangeur E-1, puis via la ligne 11 vers le ballon séparateur chaud à haute pression B-1. Une fraction gazeuse est séparée dans ce ballon et récupérée via la ligne 12. La fraction liquide hydrocraquée est récupérée en fond via la ligne 20.

La fraction gazeuse du ballon séparateur chaud à haute pression B-1 comprend de l'hydrogène n'ayant pas réagi, l'H₂S éventuellement formé au cours de la réaction, ainsi que des hydrocarbures légers issus des réactions secondaires à la réaction d'hydrocraquage. Après refroidissement dans un échangeur E-2 et un aérocondenseur A-1, cette fraction est amenée, via la ligne 13, dans un ballon séparateur froid à haute pression B-2 permettant à la fois de réaliser une séparation gaz-liquide et éventuellement une décantation de la phase liquide aqueuse, provenant de l'eau de lavage éventuellement injectée à haute pression en amont de E-2 et/ou E-1. La phase hydrocarbonée liquide est, après détente dans la vanne ou la turbine liquide V-1, dirigée dans un ballon séparateur froid à moyenne pression B-4 via la ligne 21. La phase liquide aqueuse est également dirigée, après détente dans une vanne, vers le ballon séparateur froid à moyenne pression B-4 via la ligne 24.

La fraction liquide du ballon séparateur chaud à haute pression B-1 est, après détente dans la vanne ou la turbine liquide V-2, dirigé dans un ballon séparateur chaud à moyenne pression B-3 via la ligne 20. Une fraction gazeuse est séparée dans ce ballon et récupérée via la ligne 22. Ladite fraction gazeuse comprend de l'hydrogène n'ayant pas réagi, éventuellement de l'H₂S, ainsi que généralement des hydrocarbures légers issus de la conversion des hydrocarbures de la charge dans la section réactionnelle R-1. Après refroidissement dans un aérocondenseur A-2, cette fraction est amenée, via la ligne 23, dans le ballon séparateur froid à moyenne pression B-4.

L'effluent gazeux issu du ballon B-4 constitue une fraction gazeuse riche en hydrogène purgée via la ligne 25.

La fraction gazeuse issue du ballon séparateur froid à haute pression B-2 est envoyée via la ligne 14 généralement vers un absorbeur aux amines ou une colonne de lavage C-3 permettant d'éliminer au moins une partie de l'H2S qu'elle contient. La fraction gazeuse contenant de l'hydrogène est ensuite recyclée via les lignes 15 et 16 vers le réacteur d'hydrocraquage, après compression au moyen du compresseur K-1 et mélange avec la charge 1.

La fraction liquide récupérée en fond du ballon chaud à moyenne pression B-3 est éventuellement détendue et dirigée via les lignes 30 et 31 vers le ballon séparateur chaud à basse pression B-5.

L'ensemble de ces équipements et les lignes associées peut être regroupé dans la section A.

L'effluent liquide issu du ballon B-4 constitue la fraction liquide légère issue de l'effluent réactionnel et alimente le stripeur C-1 via les lignes 32 et 33 après éventuellement préchauffe dans l'échangeur E-3. Une fraction gazeuse est éventuellement séparée dans le ballon B-5. Cette fraction gazeuse peut alors alimenter le stripeur C-1 via la ligne 34 ou en mélange avec la fraction liquide provenant de B-3 via la ligne 33.

Le stripeur C-1 est alimenté par de la vapeur de stripage via la ligne 35.

En tête du stripeur, on récupère une fraction gazeuse (généralement appelée gaz acide) via la ligne 36, et un naphta présentant un point d'ébullition final le plus souvent supérieur à 100°C via la ligne 37. Le liquide récupéré en fond de stripeur via la ligne 39 est envoyé à la colonne de fractionnement principal C-2, sans qu'il soit nécessaire de le réchauffer dans un four ou un échangeur.

La fraction liquide récupérée au ballon chaud à moyenne pression B-3 et /ou éventuellement la fraction liquide issue de B-5 constitue la fraction lourde issue de l'effluent réactionnel et alimente après préchauffage dans le four F-2 la colonne de fractionnement principal C-2 par la ligne 38, sans faire l'objet d'une opération de séparation des gaz acides dans une colonne de stripage ou une colonne de séparation rebouillie.

La colonne de fractionnement principal C-2 est opérée typiquement à faible pression, par exemple 0,19 MPa en tête de colonne. La chaleur nécessaire à la séparation est préférentiellement apportée par la température des ballons séparateurs chauds B-3 et/ou B-5. Cette colonne C-2 est également alimentée par de la vapeur de stripage via la ligne 40.

La fraction de tête récupérée via la ligne 41 contient les gaz acides résiduels qui sont comprimés dans le compresseur K-3 avant export vers le traitement des gaz acides (généralement un lavage aux amines ou une colonne de lavage) avant d'être dirigés vers un réseau gaz de combustible.

Le produit obtenu ligne 50 est constitué de coupes naphta présentant un point d'ébullition final le plus souvent inférieur à 200°C.

La fraction intermédiaire issue de la colonne de fractionnement principal voit ses propriétés ajustées dans la colonne latérale C-4 Ladite colonne latérale est alimentée par un fluide de stripage, par exemple de la vapeur. La fraction intermédiaire est extraite par la ligne 51 puis refroidie, par exemple, au moyen d'un échangeur E-4, puis récupérée via la ligne 52. Il s'agit par exemple d'une coupe gazole présentant une température de distillation à 95% volume inférieure à 360°C.

La fraction lourde issue de la colonne de fractionnement principal via la ligne 53 est également refroidie au moyen, par exemple, de l'échangeur E-5. La fraction ainsi obtenue via la ligne 55 est un gazole sous vide présentant des points de coupe voisins de la charge initiale.

### Figure 2 :

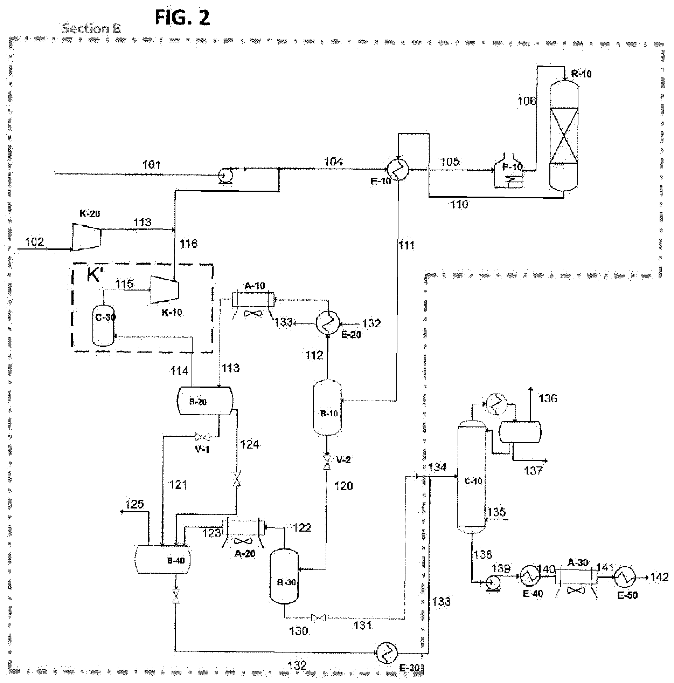

La figure 2 illustre une unité d'hydrotraitement de diesel mis en œuvre selon l'art antérieur.

La charge 101 composée d'hydrocarbures d'origine pétrolière ou d'hydrocarbures synthétiques de source minérale ou biologique est mélangée à de l'hydrogène puis est envoyée dans une section d'hydrotraitement. Cette section peut comporter un ou plusieurs réacteurs, généralement en lit fixe ou en lit bouillonnant. Chaque réacteur peut comprendre un ou plusieurs lits de catalyseurs réalisant l'hydrotraitement de la charge.

L'appoint d'hydrogène est alimenté via la ligne 102 et le compresseur K-20 puis la ligne 103, et mélangé avec l'hydrogène recyclé provenant du compresseur K-10 par la ligne 116 avant d'être mélangé à la charge 101.

Le mélange est admis dans un échangeur charge-effluent (E-10) via la ligne 104. L'échangeur E-10 permet de préchauffer la charge au moyen de l'effluent du réacteur d'hydrotraitement R-10. Après cet échange, la charge est amenée via la ligne 105 dans un four F-10 permettant d'atteindre le niveau de température nécessaire à la réaction d'hydrotraitement, puis la charge chaude est envoyée, via la ligne 106, dans au moins un réacteur R-10 comprenant généralement au moins un catalyseur d'hydrodésulfuration.

L'effluent de la section réactionnelle à la sortie du réacteur R-10 est envoyé vers l'échangeur E-10, puis via la ligne 110 vers le ballon séparateur chaud à haute pression B-10. Une fraction gazeuse est séparée dans ce ballon et récupérée via la ligne 112. La fraction liquide hydrotraitée est récupérée en fond via la ligne 120. Ladite fraction gazeuse comprend de l'hydrogène n'ayant pas réagi, l'H2S éventuellement formé au cours de la réaction, ainsi que des hydrocarbures légers issus des réactions secondaires à la réaction d'hydrotraitement. Après refroidissement dans un échangeur E-20 et un aérocondenseur A-10, cette fraction est amenée, via la ligne 113, dans un ballon séparateur froid à haute pression B-20 permettant à la fois de réaliser une séparation gaz-liquide et éventuellement une décantation de la phase liquide aqueuse, provenant de l'eau de lavage éventuellement injectée à haute pression en amont de E-20 et/ou E-10. La phase hydrocarbonée liquide est, après détente dans la vanne ou la turbine liquide V-10, dirigée dans un ballon séparateur froid à moyenne pression B-40 via la ligne 121. La phase liquide aqueuse est également dirigée, après détente dans une vanne, vers le ballon séparateur froid à moyenne pression B-40 via la ligne 124.

L'effluent liquide issu du ballon B-10 est, après détente dans la vanne ou la turbine liquide V-20, dirigé dans un ballon séparateur chaud à moyenne pression B-30 via la ligne 120. Une fraction gazeuse est séparée dans ce ballon et récupérée via la ligne 122. Ladite fraction gazeuse comprend de l'hydrogène n'ayant pas réagi, de l'H2S éventuellement, ainsi que généralement des hydrocarbures légers. Après refroidissement dans un aérocondenseur A-20, cette fraction est amenée, via la ligne 123, dans le ballon séparateur froid à moyenne pression B-40.

L'effluent gazeux issu du ballon B-40 constitue une fraction gazeuse riche en Hydrogène purgée via la ligne 125.

La fraction gazeuse issue du ballon séparateur froid à haute pression B-20 est envoyée via la ligne 14 généralement vers un absorbeur aux amines ou une colonne de lavage C-30 permettant d'éliminer au moins une partie de l'H2S qu'elle contient. La fraction gazeuse contenant de l'hydrogène est ensuite recyclée via les lignes 115 et 116 vers la section réactionnelle, après compression au moyen du compresseur K-10 et mélange avec la charge 101.

L'ensemble de ces équipements et des lignes associées peut être regroupé dans la section B.

L'effluent liquide issu du ballon B-40 constitue la fraction liquide légère issue de l'effluent réactionnel et alimente le stripeur C-10 via les lignes 132 et 133 après préchauffe éventuellement dans l'échangeur E-30.

La fraction liquide récupérée en fond du ballon chaud à moyenne pression B-30 constitue la fraction liquide lourde issue de l'effluent réactionnel. Elle alimente le stripeur C-10 via les lignes 130 et 131 après mélange avec la fraction liquide légère provenant du ballon B-40

Le stripeur C-10 est alimenté par de la vapeur de stripage via la ligne 135.

En tête du stripeur, on récupère une fraction gazeuse (généralement appelée gaz acide) via la ligne 136, et un naphta présentant un point d'ébullition final le plus souvent supérieur à 100°C et inférieur à 200°C via la ligne 137. Le liquide récupéré en fond de stripeur via la ligne 139 est envoyé au stockage via la ligne 142 après refroidissement dans les échangeurs E-40, E-50 et dans l'aérocondenseur A-30.

### Figure 3 :

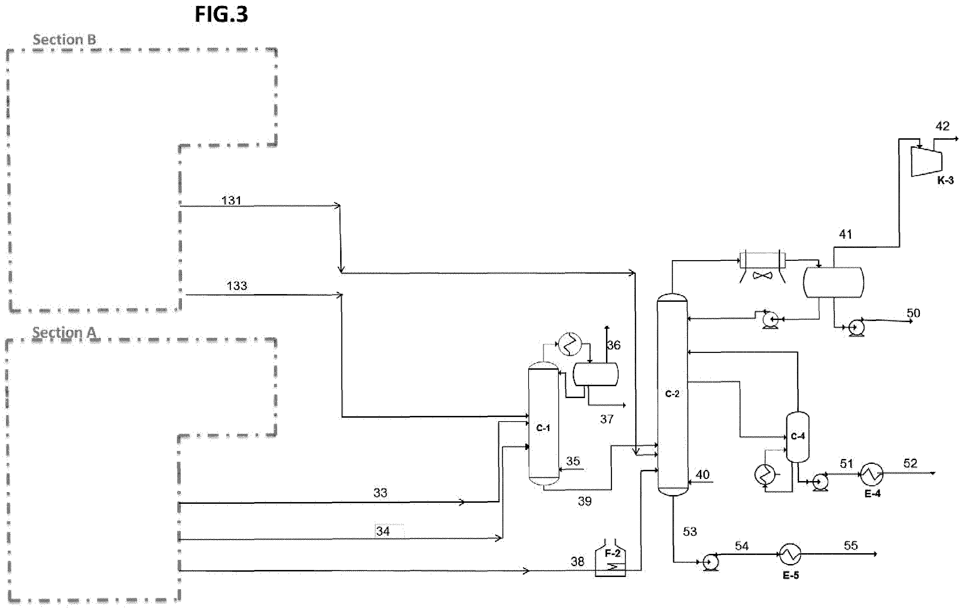

La figure 3 illustre l'installation selon l'invention avec fractionnement commun comprenant une colonne de séparation C-1 (stripeur) traitant les fractions légères et une colonne de fractionnement atmosphérique principal.

La section A de l'unité d'hydrocraquage est identique à la section A décrite dans la figure 1 et la section B de l'unité d'hydrotraitement de diesel est identique à la section B décrite dans la figure 2.

L'effluent liquide issu du ballon séparateur froid moyenne pression B-4 constitue la fraction liquide légère issue de l'effluent réactionnel de l'unité d'hydrocraquage et alimente le stripper C-1 via les lignes 32 et 33 après éventuellement préchauffe dans l'échangeur E-3.

Une fraction gazeuse est éventuellement séparée de la fraction lourde issue de l'effluent réactionnel de l'unité d'hydrocraquage dans le ballon chaud basse pression B-5. Cette fraction gazeuse peut alors alimenter le stripeur C-1 via la ligne 34 ou bien en mélange avec la fraction liquide provenant de B-3 via la ligne 33.

L'effluent liquide issu du ballon B-40 constitue la fraction liquide légère issue de l'effluent réactionnel de l'unité d'hydrotraitement de diesel et alimente le stripper C-1 via les lignes 132 et 133 après préchauffe dans l'échangeur E-30.

Le stripeur C-1 est alimenté par de la vapeur de stripage via la ligne 35.

En tête du stripeur, on récupère une fraction gazeuse (généralement appelée gaz acide) via la ligne 36, et un naphta présentant un point d'ébullition final le plus souvent supérieur à 100°C via la ligne 37. Le liquide récupéré en fond de stripeur via la ligne 39 est envoyé à la colonne de fractionnement principal C-2, sans qu'il soit nécessaire de le réchauffer dans un four ou un échangeur.

La fraction liquide récupérée au ballon chaud à moyenne pression B-3 et /ou éventuellement la fraction liquide issue de B-5 constitue la fraction lourde issue de l'effluent réactionnel de l'unité d'hydrocraquage et alimente, après préchauffage dans le four F-2, la colonne de fractionnement principal C-2 par la ligne 38, sans faire l'objet d'une opération de séparation des gaz acides dans une colonne de stripage ou une colonne de séparation rebouillie.

La fraction liquide récupérée en fond du ballon chaud à moyenne pression B-30 constitue la fraction liquide lourde issue de l'effluent réactionnel de l'unité d'hydrotraitement de diesel et alimente directement la colonne de fractionnement principal C-2 par la ligne 131, sans faire l'objet d'une opération de séparation des gaz acides dans une colonne de stripage ou une colonne de séparation rebouillie. L'alimentation se fait à un niveau distinct de l'alimentation provenant de l'unité d'hydrocraquage. L'alimentation peut être introduite soit au-dessus soit au-dessous de l'alimentation de l'unité d'hydrocraquage, mais doit être séparée.

La colonne de fractionnement principal C-2 est opérée typiquement à faible pression, par exemple 0,29 MPa en tête de colonne. La chaleur nécessaire à la séparation est préférentiellement apportée par la température des ballons séparateurs chauds B3 et/ou B-5 et B-30 et éventuellement B-50. Cette colonne C-2 est également alimentée par de la vapeur de stripage via la ligne 40.

La fraction de tête récupérée via la ligne 41 contient les gaz acides résiduels qui sont comprimés dans le compresseur K-3 avant export vers le traitement des gaz acides (généralement un lavage aux amines ou une colonne de lavage) avant d'être dirigés vers un réseau gaz de combustible.

Le produit obtenu ligne 50 est constitué de coupes naphta présentant un point d'ébullition final le plus souvent inférieure à 200°C.

La fraction intermédiaire issue de la colonne de fractionnement principal voit ses propriétés ajustées dans la colonne de stripage latéral C-4. Ladite colonne est alimentée par un fluide de stripage. La fraction intermédiaire est extraite par la ligne 51 puis refroidie, par exemple, au moyen d'un échangeur E-4. Il s'agit par exemple d'une coupe gazole présentant une température de distillation à 95% volume inférieure à 360°C. La fraction intermédiaire est constituée par le mélange de la fraction intermédiaire issue de l'unité d'hydrocraquage et de la fraction intermédiaire issue de l'unité d'hydrotraitement de diesel.

La fraction lourde issue de la colonne de fractionnement principal via la ligne 53 est également refroidie au moyen, par exemple, de l'échangeur E-5. La fraction ainsi obtenue via la ligne 55 est un gazole sous vide présentant des points de coupe voisins de la charge initiale de l'unité d'hydrocraquage.

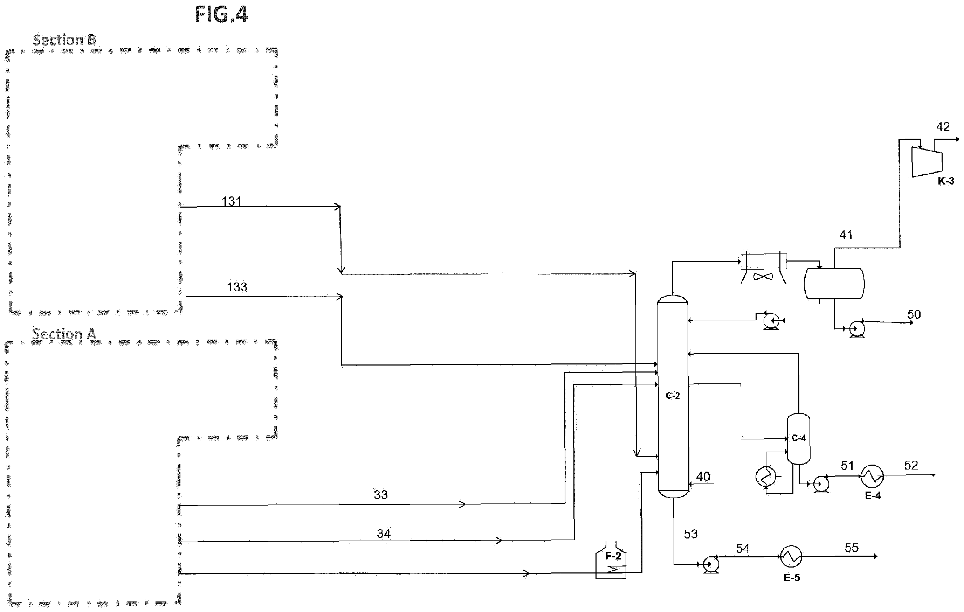

La figure 4 illustre un exemple dans lequel la section de fractionnement commune ne contient pas de colonne de séparation des fractions légères (stripeur ou colonne de stabilisation) C-1. La section de fractionnement commune ne comprend qu'une colonne atmosphérique de fractionnement principal C-2 traitant les effluents de deux unités indépendantes l'une de l'autre et une colonne de stripage latéral C-4.

Ladite colonne est alors alimentée :
- d'une part par le ou les flux légers issus de la première unité : par exemple par le liquide du ballon séparateur froid à haute pression B-2 et/ou du ballon séparateur froid à moyenne pression B-4 par la ligne 33, et éventuellement le flux gazeux issus du ballon séparateur chaud à basse pression B-5 par la ligne 38. Ces flux provenant de l'effluent réactionnel de la première unité sont alimentés séparément l'un de l'autre.
- d'autre part par le ou les flux légers issus des ballons opérant à basse température de la deuxième unité : par exemple, soit directement par le liquide du ballon séparateur froid à haute pression B-20, ou par le liquide du ballon séparateur froid à moyenne pression B-40, par la ligne 133 si celui-ci existe et éventuellement par le flux gazeux issus du ballon séparateur froid à basse pression B-50, si celui-ci existe (non représenté ici). Les flux provenant de l'effluent réactionnel de la deuxième unité sont alimentés séparément et ne sont pas mélangés avec les flux provenant de la première unité. Typiquement, les alimentations sont placées les unes par rapport aux autres de façon à ce que les coupes soient de plus en plus lourdes depuis le haut jusqu'en bas de la colonne.
- d'une part par le ou les flux lourds issus de la première unité : par exemple par le flux liquide issu du ballon séparateur chaud haute pression B-1, et /ou du ballon séparateur chaud moyenne pression B-3 et/ou du ballon séparateur chaud basse pression B-5, par la ligne 34. Typiquement, les alimentations sont placées les unes par rapport aux autres de façon à ce que les coupes soient de plus en plus lourdes depuis le haut jusqu'en bas de la colonne.
- d'autre part par le ou les flux lourds issus de la deuxième unité, c'est-à-dire les flux liquide provenant des ballons chauds si lesdits ballons existent : par exemple par le flux liquide issu du ballon séparateur chaud haute pression B-10, et /ou du ballon séparateur chaud moyenne pression B-30 et/ou du ballon séparateur chaud basse pression B-50, par la ligne 131.
- Les flux légers et lourds provenant de la séparation de l'effluent réactionnel de la deuxième unité sont alimentés séparément et ne sont pas mélangés avec les flux provenant de la première unité. Typiquement, les alimentations sont placées les unes par rapport aux autres de façon à ce que les coupes soient de plus en plus lourdes depuis le haut jusqu'en bas de la colonne.

La fraction de tête récupérée via la ligne 41 contient les gaz acides résiduels qui sont comprimés dans le compresseur K-3 avant export vers le traitement des gaz acides (généralement un lavage aux amines ou une colonne de lavage) avant d'être dirigés vers un réseau gaz de combustible.

Le produit obtenu ligne 50 est constitué de coupes naphta présentant un point d'ébullition final le plus souvent inférieure à 200°C.

La fraction intermédiaire issue de la colonne de fractionnement principal voit ses propriétés ajustées dans la colonne de stripage latéral C-4. Ladite colonne est alimentée par un fluide de stripage. La fraction intermédiaire est extraite par la ligne 51 puis refroidie, par exemple, au moyen d'un échangeur E-4, Il s'agit par exemple d'une coupe gazole présentant une température de distillation à 95% volume inférieure à 360°C. La fraction intermédiaire est constituée par le mélange de la fraction intermédiaire issue de l'unité d'hydrocraquage et de la fraction intermédiaire issue de l'unité d'hydrotraitement de diesel.

La fraction lourde issue de la colonne de fractionnement principal via la ligne 53 est également refroidie au moyen, par exemple, de l'échangeur E-5. La fraction ainsi obtenue via la ligne 55 est un gazole sous vide présentant des points de coupe voisins de la charge initiale de l'unité d'hydrocraquage.

Un four F-2 permet de chauffer éventuellement la ou les charges alimentant la colonne de fractionnement C-2. Cette colonne est alimentée par un fluide de stripage en bas de la colonne, généralement de la vapeur d'eau, introduite par la ligne 40.

### EXEMPLES

### Exemple 1 (selon l'art antérieur):

Le procédé mis en œuvre dans l'exemple fait intervenir :
- une unité d'hydrocraquaged'une charge hydrocarbonée constituée d'un mélange de distillat sous-vide et de gazole lourd issu d'une unité de cokéfaction (HCGO selon la terminologie anglo-saxonne) d'une capacité de 31 0003 BPSD
- une unité d'hydrotraitement de diesel d'une charge hydrocarbonée constituée d'un mélange de gazole (Straight Run GO selon la terminologie anglo-saxonne) et distillat sous vide léger (LVGO selon la terminologie anglo-saxonne et de gazole léger issu d'une unité de cokéfaction (LCGO selon la terminologie anglo-saxonne) d'une capacité de 33 500 BPSD.

Le rôle de la section réactionnelle de l'unité d'hydrocraquage est de craquer, ainsi que de désulfurer, déazoter et saturer les oléfines de la charge.

Le rôle de la section réactionnelle de l'unité d'hydrotraitement de diesel est de désulfurer, déazoter et saturer les oléfines de la charge.

Les charges utilisées dans cet exemple ont les propriétés suivantes.

**Tableau 1: propriétés des charges**

| Propriétés | Unité d'Hydrocraquage | Unité d'Hydrotraitement de Diesel |
|---|---|---|
| Débit, t/h | 186.3 base 100 | 198.8 base 100= 106,7 |
| Densité @ 15°C, kg/m3 | 923 | 899 |
| Masse Moléculaire, kg/mol | 372 | 223 |
| Teneur en soufre, %pds | 2.2 | 2.6 |
| Teneur en azote, ppm pds | 1 800 | 1 600 |
| Résidu de carbone, méthode Conradson, %pds | 1.0 max | - |
| ASTM D86 Distillation, vol % | | |
| IBP, °C | 313 | 198 |
| 10%, °C | 362 | 236 |
| 30%, °C | 386 | 268 |
| 50%, °C | 406 | 297 |
| 70%, °C | 438 | 324 |
| 90%, °C | 488 | 353 |
| FBP, °C | 542 | 396 |

Les unités d'hydrocraquage et d'hydrotraitement de diesel sont d'abord mises en oeuvre indépendamment l'une de l'autre.

Le schéma de l'unité d'hydrocraquage est le suivant : section réactionnelle en deux étapes, puis section séparation commune aux deux étapes, puis section fractionnement, constituée d'une colonne de stripage et d'une colonne de fractionnement acide.

Le stripeur C-1 est alimenté par la phase légère issue de la section réactionnelle provenant du mélange du liquide du ballon séparateur froid MP B-4 avec la phase vapeur du ballon séparateur chaud LP B-5.

La colonne de fractionnement atmosphérique est alimentée par le liquide du fond du stripeur et par la fraction lourde issue de la section réactionnelle constituée par le liquide du ballon séparateur chaud LP B-5.

La colonne de fractionnement est constituée d'une colonne principale et de deux colonnes attenantes (side stripper selon la terminologie anglo-saxonne) l'une C-4 pour la coupe kérosène (150°C-193°C) et l'autre C-5 pour la coupe gazole (193°C-371°C).

Les produits de la colonne de fractionnement sont un VGO non converti (Unconverted Oil, UCO selon la terminologie anglo-saxonne), du gazole et du kérosène qui vont en mélange au pool diesel et du naphta non stabilisé qui sera traité dans une section aval.

Le schéma de l'unité d'hydrotraitement de diesel est le suivant : section réactionnelle, puis section séparation, puis section fractionnement constituée d'une colonne de stripage qui produit une coupe naphta non stabilisée et une coupe gazole conforme aux spécifications, envoyée au pool diesel. Le stripeur C-10 est alimenté par le mélange de la fraction légère issue de la section réactionnelle constitué par le liquide du ballon séparateur froid MP B-40 et de la fraction lourde issue de la section réactionnelle constitué par le liquide du ballon séparateur chaud MP B-30 (cf. figure 2).

Les conditions opératoires des sections réactionnelles sont les suivantes :

**Tableau 2: Conditions opératoires des sections réactionnelles :**

| | **Hydrotraitement de Diesel** | **Hydrocraquage** |
|---|---|---|
| Vitesse spatiale horaire globale de charge liquide, h⁻¹ | 1,0 | 1.7 (HDT 1^{ière} étape) |
| | | 3,00 (HCK 1 ^{ière} étape) |
| | | 2,0 (HCK 2^{ième} étape) |

Les conditions opératoires de la section séparation de chacune de deux unités sont les suivantes :

**Tableau 3: Conditions opératoires des ballons séparateurs**

| **Paramètres opératoires** | | **Section séparation Hydrocraquage** | **Section Séparation Diesel Hydrotraitement** |
|---|---|---|---|
| **Séparateur Chaud à Haute Pression** | | | |
| **Température** | °C | 330 | 275 |
| **Pression** | Mpa g | 13.61 | 13.00 |

| **Séparateur Froid à Haute Pression** | | | |
|---|---|---|---|
| **Température** | °C | 55 | 55 |
| **Pression** | Mpa g | 13.6 | 12.70 |

| **Séparateur Chaud à Moyenne Pression** | | | |
|---|---|---|---|
| **Température** | °C | 337 | 283 |
| **Pression** | Mpa g | 2.63 | 2.58 |

| **Séparateur Froid à Moyenne Pression** | | | |
|---|---|---|---|
| **Température** | °C | 55 | 77 |
| **Pression** | Mpa g | 2.55 | 2.55 |

| **Séparateur Chaud à Basse Pression** | | | |
|---|---|---|---|
| **Température** | °C | 339 | - |
| **Pression** | Mpa g | 0.96 | - |

**Exemple 2 (selon l'invention)** : Les deux unités sont mises en oeuvre ensuite, selon l'invention, avec une section fractionnement commune où l'on alimente les différents flux liquides et gazeux issus des ballons séparateurs aux endroits qui conviennent dans la section fractionnement.

Confère l'arrangement suivant la figure 3 mais avec deux stripeurs latéraux : un stripeur lateral C-4 sur la coupe kérosène et un stripeur latéral C-5 sur la coupe diesel dont les produits sont mélangés avant d'aller au stockage de diesel.

Le stripeur C-1 est alimenté :
- par la phase légère issue de la section réactionnelle de l'HCK provenant du mélange du liquide du ballon séparateur froid MP B-4 avec la phase vapeur du ballon séparateur chaud LP B-5
- et par la fraction légère issue de la section réactionnelle de l'HDT constitué par le liquide du ballon séparateur froid MP B-40.

La colonne de fractionnement est alimentée :
- par le liquide du fond du stripeur C-1
- par la fraction lourde issue de la section réactionnelle de l'HCK constituée par le liquide du ballon séparateur chaud LP B-5,
- et par la fraction lourde issue de la section réactionnelle de l'HDT constituée par le liquide du ballon séparateur chaud MP B-30.

Les conditions opératoires des colonnes sont résumées dans le tableau 4.

**Tableau 4: Conditions opératoires des sections de fractionnement**

| **Paramètres opératoires** | | **Section fractionnement Hydrocraquage** | **Section fractionnement Hydrotraitement de Diesel** | **Section fractionnement Hydrotraitement de Diesel + Hydrocraquage** |
|---|---|---|---|---|
| **Colonne de stripage** | | | | |
| **Température tête** | °C | 118 | 180 | 122 |
| **Température reflux** | °C | 55 | 222 | 55 |
| **Température fond** | °C | 178 | 270 | 180 |
| **Pression tête** | MPa | 0.90 | 1.36 | 0.90 |
| **Nombre plateaux réels** | | 13 | 30 | 18 |
| **Fraction légère de l'HCK** | | Plateau 6 | - | Plateau 6 |
| **Fraction légère de l'HDT** | | - | Plateau 6 | Plateau 8 |
| **Fraction lourde de l'HDT** | | - | | - |

| **Colonne de Fractionnement Principal** | | | | |
|---|---|---|---|---|
| **Température tête** | °C | 114 | - | 112 |
| **Température reflux** | °C | 45 | - | 45 |
| **Température fond** | °C | 352 | - | 344 |
| **Pression tête** | MPa | 0.19 | - | 0.19 |
| **Nombre plateaux réels** | | 86 | - | 86 |
| **Soutirage Kérosène** | | Plateau 27 | - | Plateau 27 |
| **Liq fond stripeur C-1** | | Plateau 30 | - | Plateau 30 |
| **Fraction lourde de l'HDT** | | - | - | Plateau 40 |
| **Soutirage Gazole** | | Plateau 42 | - | Plateau 42 |
| **Fraction lourde de l'HCK** | | Plateau 66 | - | Plateau 66 |

Les propriétés des produits finis sont comparées suivant les différents schémas de fractionnement.

**Tableau 5 : Propriété des produits finis**

| | Unités simulées séparément selon l'art antérieur | | | Selon l'invention |
|---|---|---|---|---|
| | Hydrotraitement Fractionnement dédié | Hydrocraquage Fractionnement dédié | Propriétés du mélange des produits de l'Hydrocraquage et l'Hydrotraitement Diesel | Hydrotraitement Diesel et Hydrocraquage Fractionnement commun |
| Naphtha Non stabilisé | | | | |
| Débit, t/h | 0,8 | 10,9 | 11,7 | 9,5 |
| Densité @ 15°C, kg/m3 | 749 | 720 | 722 | 721 |
| Poids moléculaire, kg/mol | 92,32 | 97,05 | 96,65 | 97,06 |
| Point final d'ébullition, T°C | 214 | 144 | 183 | 144 |
| Teneur en soufre, ppm pds | 50 max | 50 max | 50 max | 50 max |

| Diesel + Kérosène | | | | |
|---|---|---|---|---|
| Débit, t/h | 105,5 | 80,7 | 186,2 | 186,2 |
| Densité @ 15°C, kg/m3 | 839 | 822 | 830 | 830 |
| Teneur en soufre, ppm pds | 10 max | 10 max | 10 max | 10 max |
| Indice de cétane calculé (ASTM D4737) | 52 | 59 | 56 | 56 |
| Viscosité@ 40°C, cSt | 2,6 | 2,6 | 2,6 | 2,6 |
| Point d'éclair, °C | 55 | 57 | 58 | 62 |
| Distillation ASTM D86 | | | | |
| -Récupéré @ 250°C, vol % | 38 | 36 | 38 | 39 |
| -Récupéré @ 350°C, vol % | 94 | 93 | 96 | 96 |
| -95vol% Récupéré, °C | 353 | 355 | 348 | 346 |

| VGO non converti | | | | |
|---|---|---|---|---|
| Débit, t/h | - | 0,5 | 0,5 | 0,5 |
| Densité @ 15°C, kg/m3 | - | 844 | 844 | 844 |
| Teneur en soufre, ppm pds | - | 10 max | 10 max | 10 max |
| Teneur en azote, ppm pds | - | 5 max | 5 max | 5 max |
| Point d'écoulement, °C | - | 40 max | 40 max | 40 max |
| Viscosité@ 100°C, cSt | - | 5,8 | 5,8 | 5,9 |
| Métaux (Ni+V), ppm pds | - | 0,1 max | 0,1 max | 0,1 max |
| ASTM D1160 Distillation, vol % | - | | | |
| IBP, °C | - | 384 | 384 | 392 |
| 10%, °C | - | 417 | 417 | 419 |
| 30%, °C | - | 445 | 445 | 445 |
| 50%, °C | - | 470 | 470 | 470 |
| 70%, °C | - | 500 | 500 | 500 |
| 90%, °C | - | 535 | 535 | 535 |
| FBP, °C | - | 564 | 564 | 564 |

Le tableau 5 montre que les produits finis obtenus dans le procédé suivant l'invention avec une section de fractionnement commune sont équivalents en quantité et qualité aux produits finis obtenus par le mélange des produits des deux unités simulés suivant l'art antérieur avec chacun leur section de fractionnement pour ce qui concerne le mélange Diesel et Kérosène et pour le VGO non converti.

### Exemple 3 (selon l'invention)

L'unité d'hydrotraitement de Diesel décrite dans l'exemple 1 avec la charge décrite dans l'exemple 1 produit une coupe Diesel + Kérosène qui satisfait les propriétés du pool Diesel grade A à D. Cette unité ne peut avec la même charge produire un diesel conforme aux spécifications pour l'hiver du gazole dans la norme EN590 :2013 de juillet 2013, pour des climats tempérés. En effet, suivant cette norme, la température limite de filtrabilité maximum (Cold Filter Plugging Point dans la terminologie anglo-saxonne) varie de +5°C pour le grade A à -15°C pour le grade E et -20 pour le grade F qui correspondent à des grades typiquement utilisés quand la température extérieure est plus basse (en hiver).

**Tableau 6: Spécifications du Gazole dans la norme EN 590 :2013 de Juillet 2013 :**

| | Spécifications générales |
|---|---|
| Densité @ 15°C, kg/m3 | 820-845 |
| Teneur en soufre, ppm pds | 10 max |
| Indice de cétane calculé | 46 min |
| Viscosité@ 40°C, cSt | 2.5-4 |
| Point d'éclair, °C | 55 min |

| Distillation ASTM D86 | |
|---|---|
| -Récupéré @ 250°C, vol % | 65 max |
| -Récupéré @ 350°C, vol % | 85 min |
| -95vol% Récupéré, °C | 360 max |

**Tableau 7: Spécifications de la température limite de filtrabilité du gazole pour les climats tempérés selon la norme EN 590 :2013 de Juillet 2013 :**

| Grade | A | B | C | D | E | F |
|---|---|---|---|---|---|---|
| Température limite de filtrabilité (CFPP) maximum, °C | +5 | 0 | -5 | -10 | -15 | -20 |

Selon l'invention, l'unité d'hydrotraitement de diesel et l'unité d'hydrocraquage sont mises en œuvre comme dans l'exemple 2 avec une section de fractionnement commune où les différents flux liquides et gazeux issus des ballons sont séparément alimentés aux endroits qui conviennent dans la section fractionnement. La même charge diesel envoyée à l'unité d'hydrotraitement de diesel permet de produire diverses qualités de diesel+kérosène dont celle conforme avec le grade E en ajustant le point de coupe du diesel dans la section de fractionnement commune.

Les propriétés de la coupe diesel+kérosène obtenue selon l'invention avec deux points de coupe différents au fractionnement principal sont résumées dans le tableau 7 ci-dessous.

**Tableau 8 : propriétés du Diesel + Kérosène:**

| | Point de coupe 1 | Point de coupe 2 |
|---|---|---|
| Débit, t/h | 186,2 | 173,9 |
| Densité @ 15°C, kg/m3 | 830 | 829 |
| Teneur en soufre, ppm pds | 10 max | 10 max |
| Indice de cétane calculé | 56 | 52 |
| Viscosité@ 40°C, cSt | 2.6 | 2.5 |
| Point d'éclair, °C | 62 | 60 |
| Température limite de filtrabilité (CFPP), °C | -10 | -18 |

| Distillation ASTM D86 | | |
|---|---|---|
| -Récupéré @ 250°C, vol % | 39 | 44 |
| -Récupéré @ 350°C, vol % | 96 | 96 |
| -95vol% Récupéré, °C | 346 | 340 |
| **Grade correspondant :** | **D** | **E** |

### Exemple 4:

L'exemple 4 illustre l'exemple décrit sur la Figure 4 avec une section de fractionnement commune comprenant une colonne de fractionnement atmosphérique C-2 sans colonne de séparation C-1 des fractions légères.

Le procédé mis en œuvre dans l'exemple fait intervenir :
- une unité d'hydrocraquage de la même capacité et traitant les mêmes charges que l'unité d'hydrocraquage de l'exemple 1 dans le même objectif et avec les mêmes conditions opératoires pour la section réactionnelle.
- une unité d'hydrotraitement de diesel de la même capacité et traitant les mêmes charges que l'unité d'hydrotraitement de diesel de l'exemple 1 dans le même objectif et avec les mêmes conditions opératoires pour la section réactionnelle.

Les unités d'hydrocraquage et d'hydrotraitement de diesel sont d'abord mises en oeuvre indépendamment l'une de l'autre.

Le schéma de l'unité d'hydrocraquage est le suivant : section réactionnelle en deux étapes, puis section séparation, puis section fractionnement, constituée d'une colonne de fractionnement acide C-2 sans colonne de séparation des fractions légères C-1.

La colonne de fractionnement atmosphérique est alimentée par la fraction lourde issue de la section réactionnelle constituée par le liquide du ballon séparateur chaud HP B-4, par la fraction légère issue de la section réactionnelle provenant du liquide du ballon séparateur chaud LP B-5 et de la phase vapeur du ballon séparateur chaud LP B-5,

La colonne de fractionnement C-2 est constituée d'une colonne principale et de deux colonnes attenantes (side stripper selon la terminologie anglo-saxonne) l'une C-4 pour la coupe kérosène (150°C-193°C) et l'autre C-5 pour la coupe gazole (193°C-371°C).

Les produits de la colonne de fractionnement sont un VGO non converti (Unconverted Oil, UCO selon la terminologie anglo-saxonne), du gazole et du kérosène qui vont en mélange au pool diesel du naphta non stabilisé qui sera traité dans une section aval et une fraction de gaz acides.

Le schéma de l'unité d'hydrotraitement de diesel est identique au schéma de l'unité d'hydrotraitement de diesel de l'exemple 1.

Les conditions opératoires de la section séparation de chacune de deux unités sont identiques aux conditions opératoires de la section séparation des unités de l'exemple 1:
Les deux unités sont mises en oeuvre ensuite, selon l'invention, avec une section de fractionnement commun où l'on alimente les différents flux liquides et gazeux issus des ballons séparateurs aux endroits qui conviennent dans la colonne de fractionnement principal, sans colonne de séparation des fractions légères, selon l'exemple décrit sur la figure 4, mais avec deux stripeurs
latéraux : un stripeur latéral C-4 sur la coupe kérosène et un stripeur latéral C-5 (non représenté) sur la coupe diesel dont les produits sont mélangés avant d'aller au stockage de diesel.

La colonne de fractionnement C-2 est alimentée :
- par la phase légère issue de la section réactionnelle de l'hydrocraquage provenant du mélange du liquide du ballon séparateur froid MP B-4 avec la phase vapeur du ballon séparateur chaud LP B-5
- par la fraction légère issue de la section réactionnelle de l'hydrotraitement constitué par le liquide du ballon séparateur froid MP B-40,
- par la fraction lourde issue de la section réactionnelle de l'hydrocraquage constituée par le liquide du ballon séparateur chaud LP B-5,
- et par la fraction lourde issue de la section réactionnelle de l'hydrotraitement constituée par le liquide du ballon séparateur chaud MP B-30.

Les conditions opératoires des colonnes sont résumées dans le tableau 4.

**Tableau 9 : Conditions opératoires des sections de fractionnement**

| **Paramètres opératoires** | | **Section fractionnement Hydrocraquage** | **Section fractionnement Hydrotraitement Diesel** | **Section fractionnement commune Hydrotraitement de Diesel + Hydrocraquage** |
|---|---|---|---|---|
| **Colonne de stripage** | | | | |
| **Température tête** | °C | - | 180 | - |
| **Température reflux** | °C | - | 222 | - |
| **Température fond** | °C | - | 270 | - |
| **Pression tête** | MPa | - | 1.36 | - |
| **Nombre plateaux réels** | | - | 30 | - |
| **Fraction légère de l'HCK** | | - | - | - |
| **Fraction légère de l'HDT** | | - | Plateau 6 | - |
| **Fraction lourde de l'HDT** | | - | | - |

| **Colonne de Fractionnement Principal** | | | | |
|---|---|---|---|---|
| **Température tête** | °C | 115 | - | 109 |
| **Température reflux** | °C | 45 | - | 45 |
| **Température fond** | °C | 352 | - | 354 |
| **Pression tête** | MPa | 0.19 | - | 0.19 |
| **Nombre plateaux réels** | | 86 | - | 86 |
| **Soutirage Kérosène** | | Plateau 27 | - | Plateau 30 |
| **Soutirage Gazole** | | Plateau 42 | - | Plateau 45 |
| **Fraction légère de l'Hydrotraitement de Diesel** | | - | - | Plateau 35 |
| **Fraction lourde de l'Hydrotraitement de Diesel** | | - | - | Plateau 40 |
| **Fraction légère froide de l'Hydrocraquage** | | Plateau 40 | | Plateau 40 |
| **Fraction légère chaude de l'Hydrocraquage** | | Plateau 50 | - | Plateau 50 |
| **Fraction lourde de l'Hydrocraquage** | | Plateau 66 | - | Plateau 66 |

Les propriétés des produits finis sont comparées suivant les différents schémas de fractionnement.

**Tableau 10 : Propriété des produits finis**

| | Unités simulées séparément selon l'art antérieur | | | Selon l'invention |
|---|---|---|---|---|
| | Hydrotraitement Fractionnement dédié | Hydrocraquage Fractionnement dédié | Propriétés du mélange des produits de l'Hydrocraquage et l'Hydrotraitement Diesel | Hydrotraitement Diesel et Hydrocraquage Fractionnement commun |
| Naphtha Non stabilisé | | | | |
| Débit, t/h | 0,8 | 10,9 | 11,7 | 9,9 |
| Densité @ 15°C, kg/m3 | 749 | 720 | 722 | 719 |
| Poids moléculaire, kg/mol | 92,32 | 97,05 | 96,65 | 97.16 |
| Point final d'ébullition, T°C | 214 | 144 | 183 | 144 |
| Teneur en soufre, ppm pds | 50 max | 50 max | 50 max | 50 max |

| Diesel + Kérosène | | | | |
|---|---|---|---|---|
| Débit, t/h | 105,5 | 80,7 | 186,2 | 186,2 |
| Densité @ 15°C, kg/m3 | 839 | 822 | 830 | 830 |
| Teneur en soufre, ppm pds | 10 max | 10 max | 10 max | 10 max |
| Indice de cétane calculé (ASTM D4737) | 52 | 59 | 56 | 56 |
| Viscosité@ 40°C, cSt | 2,6 | 2,6 | 2,6 | 2,6 |
| Point d'éclair, °C | 55 | 57 | 58 | 62 |

| Distillation ASTM D86 | | | | |
|---|---|---|---|---|
| -Récupéré @ 250°C, vol % | 38 | 36 | 38 | 39 |
| -Récupéré @ 350°C, vol % | 94 | 93 | 96 | 96 |
| -95vol% Récupéré, °C | 353 | 355 | 348 | 346 |

| VGO non converti | | | | |
|---|---|---|---|---|
| Débit, t/h | - | 0,5 | 0,5 | 0,5 |
| Densité @ 15°C, kg/m3 | - | 844 | 844 | 844 |
| Teneur en soufre, ppm pds | - | 10 max | 10 max | 10 max |
| Teneur en azote, ppm pds | - | 5 max | 5 max | 5 max |
| Point d'écoulement, °C | - | 40 max | 40 max | 40 max |
| Viscosité@ 100°C, cSt | - | 5,8 | 5,8 | 5,9 |
| Métaux (Ni+V), ppm pds | - | 0,1 max | 0,1 max | 0,1 max |
| ASTM D1160 Distillation, vol % | - | | | |
| IBP, °C | - | 384 | 384 | 390 |
| 10%, °C | - | 417 | 417 | 416 |
| 30%, °C | - | 445 | 445 | 446 |
| 50%, °C | - | 470 | 470 | 472 |
| 70%, °C | - | 500 | 500 | 500 |
| 90%, °C | - | 535 | 535 | 535 |
| FBP, °C | - | 564 | 564 | 564 |

Le tableau 10 montre que les produits finis obtenus avec une section de fractionnement commun constituée d'une colonne de fractionnement principal et deux colonnes de stripage latéral, ,sont équivalents en quantité et qualité aux produits finis obtenus par le mélange des produits des deux unités mises en oeuvre suivant l'art antérieur avec chacune leur section de fractionnement pour ce qui concerne le mélange Diesel et Kérosène et pour le VGO non converti.

## Revendications

1. Installation d'hydrotraitement et d'hydroconversion de charges hydrocarbonées, avec section de fractionnement commun, pour la production d'au moins un des produits suivants : naphta (léger et/ou lourd), diesel, kérosène, distillat et résidu, comprenant au moins :
- une première unité comportant :
• une première section réactionnelle R-1 comprenant au moins un réacteur d'hydroconversion,
• un ballon séparateur chaud à haute pression B-1, opérant à une pression comprise entre 1,4 et 35 MPa et une température comprise entre 200°C et 450°C, et comportant une ligne pour son alimentation par l'effluent issu de la première section réactionnelle R-1 et dont l'effluent liquide est une fraction lourde de l'effluent de la première section réactionnelle R-1.
• un ballon séparateur froid à haute pression B-2, opérant à une pression comprise entre 1,3 et 35 MPa et une température comprise entre 20°C et 100°C, et comportant une ligne pour son alimentation par le flux gazeux issu du ballon séparateur chaud à haute pression B-1 et dont l'effluent liquide est une fraction légère de l'effluent de la première section réactionnelle R-1.
• un ballon séparateur chaud à moyenne pression B-3, opérant à une pression comprise entre 1 et 5 MPa et une température comprise entre 200°C et 450°C, et comportant une ligne pour son alimentation par l'effluent liquide issu du ballon séparateur chaud à haute pression B-1, et dont l'effluent liquide alimente le ballon B-5 ;
• un ballon séparateur froid à moyenne pression B-4, opérant à une pression comprise entre 1 et 5 MPa et une température comprise entre 20°C et 100°C, et comportant des lignes pour son alimentation par l'effluent liquide issu du ballon séparateur froid à haute pression B-2 et la fraction gazeuse issue du ballon séparateur chaud à moyenne pression B-3 et dont l'effluent liquide constitue une charge de la section de fractionnement commun ;
• un ballon séparateur chaud à basse pression B-5, opérant à une pression comprise entre 0,2 et 2,5 MPa et une température comprise entre 200°C et 450°C, et comportant une ligne pour son alimentation par le flux liquide issu du ballon séparateur chaud à moyenne pression B-3 et dont l'effluent liquide constitue une charge de la section de fractionnement commun.
- une deuxième unité comportant :
• une deuxième section réactionnelle R-10 comprenant au moins un réacteur d'hydrotraitement,
• un ballon séparateur chaud à haute pression B-10, opérant à une pression comprise entre 1,4 et 35 MPa et une température comprise entre 200°C et 450°C, et comportant une ligne pour son alimentation par l'effluent issu de la deuxième section réactionnelle R-10, et dont l'effluent liquide est une fraction lourde de l'effluent de la section réactionnelle R10 ;
• un ballon séparateur froid à haute pression B-20, opérant à une pression comprise entre 1,3 et 35 MPa et une température comprise entre 20°C et 100°C, et comportant une ligne pour son alimentation par le flux gazeux éventuel issu du ballon séparateur chaud à haute pression B-10, ou directement par l'effluent issu de la deuxième section réactionnelle R-10, et dont l'effluent liquide constitue la fraction légère ou un mélange de la fraction légère et de la fraction lourde de l'effluent de la deuxième section réactionnelle R-10 qui alimente soit un ballon séparateur froid à moyenne ou basse pression soit directement la section de fractionnement commun.
• un ballon séparateur chaud à moyenne pression B-30, opérant à une pression comprise entre 1 et 5 MPa et une température comprise entre 200°C et 450°C, dont la charge est le flux liquide issu du ballon séparateur chaud haute pression B-10,
• un ballon séparateur froid à moyenne pression B-40, opérant à une pression comprise entre 1 et 5 MPa et une température comprise entre 20°C et 100°C, et comportant une ligne pour son alimentation par le flux liquide issu du ballon séparateur froid à haute pression B-20 et une ligne pour son alimentation par le flux gazeux issu du ballon séparateur chaud à moyenne pression B-30, et dont l'effluent liquide constitue une charge de la section de fractionnement commun
• un ballon séparateur chaud à basse pression B-50, opérant à une pression comprise entre 0,2 et 2,5 MPa et une température comprise entre 200°C et 450°C, et comportant une ligne pour son alimentation par le flux liquide issu du ballon séparateur chaud à moyenne pression B-30, et dont l'effluent liquide et l'effluent vapeur constituent une ou plusieurs charges de la section de fractionnement commun
- une section de fractionnement commun comprenant :
o au moins une colonne de fractionnement principal C-2, permettant de séparer une fraction de tête, une fraction intermédiaire et une fraction lourde, lesdites fractions comprenant les différents produits des première et deuxième unités,
l'alimentation du ou des flux provenant de la première unité et l'alimentation du ou des flux provenant de la deuxième unité vers ladite section de fractionnement commun étant distinctes,
∘ une colonne de séparation C-1 comportant des lignes d'alimentation séparées pour :
-- d'une part le flux liquide issu du ballon séparateur froid haute pression B-2, et éventuellement le flux gazeux issu du ballon séparateur chaud basse pression B-5 de la première unité ;
-- d'autre part le flux liquide du ballon séparateur froid à haute pression B-20, et/ou le flux liquide du ballon séparateur froid à moyenne pression B-40, et/ou le flux gazeux issu du ballon séparateur froid à basse pression B-50, de la deuxième unité ;
la colonne de fractionnement principal C-2 comportant une ligne d'alimentation pour l'effluent liquide de ladite colonne de séparation C-1, distincte d'une ligne d'alimentation pour le flux liquide issu du ballon séparateur chaud basse pression B-5 de la première unité et d'une ligne d'alimentation pour le flux liquide issu du ballon séparateur chaud moyenne pression B-30 de la deuxième unité.

2. Installation selon la revendication 1 dans laquelle la section de fractionnement commun comprend en outre :
- au moins une colonne de stripage latéral C-4, C-5, ou C-6 alimentée par l'un des produits de la fraction intermédiaire issue de la colonne de fractionnement principal C-2 : kérosène, diesel, ou résidu, permettant de séparer une fraction gazeuse de tête et une fraction liquide de fond,
- une conduite permettant de renvoyer ladite fraction gazeuse de tête vers la colonne de fractionnement principal C-2 ;
- un échangeur E4 pour refroidir ladite fraction liquide de fond de ladite colonne de stripage latéral ;
- une conduite de sortie de ladite fraction liquide refroidie.

3. Installation selon l'une des revendications 1 ou 2 , comprenant une section de traitement des gaz acides C-7 comprenant un absorbeur aux amines ou une colonne de lavage opérant à très basse pression, alimentée par au moins une partie de la fraction de tête issue de la colonne de fractionnement principal C-2 contenant les gaz acides résiduels.

4. Installation selon l'une des revendications 1 à 3 comprenant une section de récupération des gaz de pétrole liquéfiés comprenant une ou plusieurs colonnes de fractionnement, alimentée par au moins une partie de la fraction de tête issue de la colonne de fractionnement principal C-2 contenant les gaz acides résiduels, ou par le flux issu de la section de traitement des gaz acides C7.

5. Installation selon l'une des revendications précédentes dans laquelle l'une ou l'autre des sections réactionnelles comprennent une section d'hydroisomérisation incluant un déparaffinage catalytique, comprenant au moins un lit catalytique de catalyseur comprenant une zéolithe, une fonction hydrogénante/déshydrogénante, et une fonction acide.

6. Installation selon l'une des revendications précédentes dans laquelle la première unité est une unité d'hydrocraquage et la deuxième unité une unité d'hydrodésulfuration de diesel.

7. Installation selon l'une des revendications 1 à 5 dans laquelle la première unité est une unité d'hydroconversion de résidu ou de distillat ou d'huile désasphaltée en lit bouillonnant, et la deuxième unité est une unité d'hydrodésulfuration de distillat sous vide ou de diesel ou de kérosène.

8. Installation selon la revendication 7 dans laquelle la première unité est une unité d'hydroconversion d'huile désasphaltée en lit bouillonnant et la deuxième unité est une unité d'hydrodésulfuration de distillat sous vide.

9. Procédé intégré d'hydrotraitement et hydroconversion de gazoles, de distillats sous vide, de résidus atmosphérique ou sous vide utilisant l'installation selon l'une des revendications 1 à 8, dans lequel la colonne de séparation C-1 fonctionne aux conditions suivantes : pression totale comprise entre 0,4 MPa et 2,0 MPa, de manière préférée entre 0,6 et 2,0 MPa, de manière très préférée entre 0,7 et 1,8 MPa.

10. Procédé intégré d'hydrotraitement et hydroconversion de charges hydrocarbonées selon la revendication 9, dans lequel la colonne de fractionnement C-2 fonctionne aux conditions de pression suivantes : pression totale comprise entre 0,1MPa et 0,4 MPa, de préférence comprise entre 0,1 MPa et 0,3 MPa.

11. Procédé intégré d'hydrotraitement et hydroconversion de charges hydrocarbonées selon la revendication 9 ou 10, dans lequel la ou les colonne(s) de stripage latéral C-4, C-5 et C-6 fonctionnent aux conditions de pression suivantes : pression totale comprise entre 0,1 MPa et 0,4 MPa, de préférence comprise entre 0,1 MPa et 0,3 MPa.

12. Procédé intégré d'hydrotraitement et hydroconversion de charges hydrocarbonées selon l'une des revendications 9 à 11 dans lequel les conditions opératoires des réactions catalytiques d'hydrotraitement, hydroconversion et hydroisomérisation sont : une température des sections réactionnelles en lit fixe comprise entre 200 et 460 °C, une température moyenne du lit catalytique des sections réactionnelles en lit bouillonnant comprise entre 300 et 600 °C, de manière préférée entre 350°C et 510°C, une pression totale comprise entre 1,5 MPa et 35 MPa, de préférence entre 2 et 25 MPa, une vitesse spatiale horaire globale de charge liquide pour chaque étape catalytique comprise entre 0,1 et 20 de préférence comprise entre 0,15 et 15, une quantité d'hydrogène par rapport à la charge liquide comprise entre 50 et 2500 Nm³/m³.

13. Procédé intégré d'hydrotraitement et hydroconversion selon l'une des revendications 9 à 12 dans lequel la charge hydrocarbonée est choisie parmi les charges de type distillat atmosphérique (naphta, essence, kérosène et gazoles), distillat sous vide, par exemple gazoles, issus de la distillation directe du brut ou d'unités de conversion telles que le FCC la cokéfaction ou la viscoréduction, comme le LCO (light cycle oil) gazole léger issu d'une unité de craquage catalytique, les charges provenant d'unités d'extraction d'aromatiques, les bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, les huiles désasphaltées, les effluents d'une unité de Fischer-Tropsch, les huiles végétales, seules ou en mélange ou les graisses animales.

14. Procédé intégré d'hydrotraitement et hydroconversion selon la revendication 13 dans lequel la charge hydrocarbonée est choisie parmi les gazoles, les distillats sous vide, les résidus atmosphérique ou sous vide ou les effluents d'unité Fischer-Tropsch.

## Patentansprüche

1. Anlage zur Hydrobehandlung und Hydroumwandlung von Kohlenwasserstoffchargen mit gemeinsamem Fraktionierungabschnitt für die Erzeugung mindestens eines der folgenden Produkte: Naphtha (leicht und/oder schwer), Diesel, Kerosin, Destillat und Reststoff, umfassend mindestens:
- eine erste Einheit, umfassend:
• einen ersten Reaktionsabschnitt R-1, umfassend mindestens einen Reaktor zur Hydroumwandlung,
• einen heißen Hochdrucktrennbehälter B-1, der bei einem Druck zwischen 1,4 und 35 MPa und einer Temperatur zwischen 200 °C und 450 °C arbeitet und eine Leitung für seine Versorgung mit dem aus dem ersten Reaktionsabschnitt R-1 kommenden Abfluss umfasst, und dessen flüssiger Abfluss eine schwere Fraktion des Abflusses des ersten Reaktionsabschnitts R-1 ist,
• einen kalten Hochdrucktrennbehälter B-2, der bei einem Druck zwischen 1,3 und 35 MPa und einer Temperatur zwischen 20 °C und 100 °C arbeitet und eine Leitung für seine Versorgung mit dem aus dem heißen Hochdrucktrennbehälter B-1 kommenden Gasstrom umfasst, und dessen flüssiger Abfluss eine leichte Fraktion des Abflusses des ersten Reaktionsabschnitts R-1 ist,
• einen heißen Mitteldrucktrennbehälter B-3, der bei einem Druck zwischen 1 und 5 MPa und einer Temperatur zwischen 200 °C und 450 °C arbeitet und eine Leitung für seine Versorgung mit dem aus dem heißen Hochdrucktrennbehälter B-1 kommenden flüssigen Abfluss umfasst, und dessen flüssiger Abfluss den Behälter B-5 versorgt,
• einen kalten Mitteldrucktrennbehälter B-4, der bei einem Druck zwischen 1 und 5 MPa und einer Temperatur zwischen 20 °C und 100 °C arbeitet und Leitungen für seine Versorgung mit dem aus dem kalten Hochdrucktrennbehälter B-2 kommenden flüssigen Abfluss und der aus heißen Mitteldrucktrennbehälter B-3 kommenden Gasfraktion umfasst, und dessen flüssiger Abfluss eine Charge des gemeinsamen Fraktionierungsabschnitts darstellt;
• einen heißen Niederdrucktrennbehälter B-5, der bei einem Druck zwischen 0,2 und 2,5 MPa und einer Temperatur zwischen 200 °C und 450 °C arbeitet und eine Leitung für seine Versorgung mit dem aus dem heißen Mitteldrucktrennbehälter B-3 kommenden Flüssigstrom umfasst, und dessen flüssiger Abfluss eine Charge des gemeinsamen Fraktionierungsabschnitts darstellt,
- eine zweite Einheit umfassend:
• einen zweiten Reaktionsabschnitt R-10, umfassend mindestens einen Reaktor zur Hydroumwandlung,
• einen heißen Hochdrucktrennbehälter B-10, der bei einem Druck zwischen 1,4 und 35 MPa und einer Temperatur zwischen 200 °C und 450 °C arbeitet und eine Leitung für seine Versorgung mit dem aus dem zweiten Reaktionsabschnitt R-10 kommenden Abfluss umfasst, und dessen flüssiger Abfluss eine schwere Fraktion des Abflusses des Reaktionsabschnitts R-10 ist,
• einen kalten Hochdrucktrennbehälter B-20, der bei einem Druck zwischen 1,3 und 35 MPa und einer Temperatur zwischen 20 °C und 100 °C arbeitet und eine Leitung für seine Versorgung mit dem eventuellen aus dem heißen Hochdrucktrennbehälter B-10 kommenden Gasstrom oder direkt mit dem aus dem zweiten Reaktionsabschnitt R-10 kommenden Abfluss umfasst, und dessen flüssiger Abfluss die leichte Fraktion oder ein Gemisch der leichten Fraktion und der schweren Fraktion des Ausflusses aus dem zweiten Reaktionsabschnitt R-10 darstellt, die entweder einen kalten Mittel- oder Niederdrucktrennbehälter oder direkt den gemeinsamen Fraktionierungsabschnitt versorgt,
• einen heißen Mitteldrucktrennbehälter B-30, der bei einem Druck zwischen 1 und 5 MPa und einer Temperatur zwischen 200 °C und 450 °C arbeitet und dessen Charge der aus dem heißen Hochdrucktrennbehälter B-10 kommende Gasstrom ist, und dessen flüssiger Abfluss aus dem heißen Hochdrucktrennbehälter B-10 kommt,
• einen kalten Mitteldrucktrennbehälter B-40, der bei einem Druck zwischen 1 und 5 MPa und einer Temperatur zwischen 20 °C und 100 °C arbeitet und eine Leitung für seine Versorgung mit dem aus dem kalten Hochdrucktrennbehälter B-20 kommenden flüssigen Abfluss und eine Leitung für seine Versorgung mit der aus heißen Mitteldrucktrennbehälter B-30 kommenden Gasstrom umfasst, und dessen flüssiger Abfluss eine Charge des gemeinsamen Fraktionierungsabschnitts darstellt;
• einen heißen Niederdrucktrennbehälter B-50, der bei einem Druck zwischen 0,2 und 2,5 MPa und einer Temperatur zwischen 200 °C und 450 °C arbeitet und eine Leitung für seine Versorgung mit dem aus dem heißen Mitteldrucktrennbehälter B-30 kommenden Flüssigstrom umfasst, und dessen flüssiger Abfluss und Dampfabfluss eine oder mehrere Chargen des gemeinsamen Fraktionierungsabschnitts darstellen,
- einen gemeinsamen Fraktionierungsabschnitt, umfassend:
• mindestens eine Hauptfraktionierungskolonne C-2, die es ermöglicht, eine Kopffraktion, eine Zwischenfraktion und eine schwere Fraktion zu trennen, wobei die Fraktionen die verschiedenen Produkte der ersten und zweiten Einheiten umfassen,
wobei die Versorgung des oder der Ströme, die von der ersten Einheit kommen, und die Versorgung des oder der Ströme, die von der zweiten Einheit zu dem gemeinsamen Fraktionierungsabschnitt kommen, getrennt sind,
• eine Fraktionierungskolonne C-1, umfassend getrennte Versorgungsleitungen für:
- einerseits den aus dem kalten Hochdrucktrennbehälter B-2 kommenden Flüssigstrom und eventuell den aus dem heißen Niederdrucktrennbehälter B-5 der ersten Einheit kommenden Gasstrom;
- andererseits den aus dem kalten Hochdrucktrennbehälter B-20 kommenden Flüssigstrom und/oder den aus dem kalten Mitteldrucktrennbehälter B-40 kommenden Flüssigstrom und/oder den aus dem kalten Niederdrucktrennbehälter B-50 kommenden Gasstrom der zweiten Einheit;
wobei die Hauptfraktionierungskolonne C-2 eine Versorgungsleitung für den flüssigen Abfluss aus der Trennungskolonne C-1 umfasst, die von einer Versorgungsleitung für den Flüssigstrom aus dem heißen Niederdrucktrennbehälter B-5 der ersten Einheit und einer Versorgungsleitung für den Flüssigstrom aus dem heißen Mitteldrucktrennbehälter B-30 der zweiten Einheit getrennt ist.

2. Anlage nach Anspruch 1, bei der der gemeinsame Fraktionierungsabschnitt ferner umfasst:
- mindestens eine Seitenstripping-Kolonne C-4, C-5 oder C-6, die mit einem der Produkte der Zwischenfraktion, die aus der Hauptfraktionierungskolonne C-2 kommt, versorgt wird: Kerosin, Diesel oder Reststoffe, die es ermöglichen, eine Kopfgasfraktion und eine Bodenflüssigfraktion zu trennen,
- eine Leitung, die es ermöglicht, die Kopfgasfraktion zu der Hauptfraktionierungskolonne C-2 zurückzuschicken;
- einen Tauscher E4, um die Bodenflüssigfraktion der Seitenstripping-Kolonne zu kühlen;
- Ausgangsleitung für die gekühlte Flüssigfraktion.

3. Anlage nach einem der Ansprüche 1 oder 2, umfassend einen Bearbeitungsabschnitt der Sauergase C-7, umfassend einen Absorber an den Aminen oder eine Waschkolonne, die mit sehr niedrigem Druck arbeitet, die mit mindestens einem Teil der Kopffraktion versorgt wird, die von der Hauptfraktionierungskolonne C-2 kommt und die Restsauergase enthält.

4. Anlage nach einem der Ansprüche 1 bis 3, umfassend einen Wiedergewinnungsabschnitt der Flüssiggase, umfassend eine oder mehrere Fraktionierungskolonnen, die mit mindestens einem Teil der aus der Hauptfraktionierungskolonne C-2 kommenden Kopffraktion, die die Restsauergase enthält, oder mit dem aus dem Behandlungsabschnitt der Sauergase C7 kommenden Strom versorgt wird.

5. Anlage nach einem der vorhergehenden Ansprüche, bei der der eine oder der andere der Reaktionsabschnitte einen Hydroisomerisationsabschnitt umfasst, der eine katalytische Entparaffinierung einschließt, umfassend mindestens ein katalytisches Bett eines Katalysators, umfassend einen Zeolith, eine hydrogenierende/deshydrogenierende Funktion und eine saure Funktion.

6. Anlage nach einem der vorhergehenden Ansprüche, bei der die erste Einheit eine Hydrocracking-Einheit und die zweite Einheit eine Hydroentschwefelungseinheit von Diesel ist.

7. Anlage nach einem der Ansprüche 1 bis 5, bei der die erste Einheit eine Hydroumwandlungseinheit von Reststoff oder Destillat oder von entasphaltiertem Öl im Wallendbett und die zweite Einheit eine Entschwefelungseinheit von Vakuumdestillat oder von Diesel oder von Kerosin ist.

8. Anlage nach Anspruch 7, bei der die erste Einheit eine Hydroumwandlungseinheit von entasphaltiertem Öl im Wallendbett und die zweite Einheit eine Hydroentschwefelungseinheit von Vakuumdestillat ist.

9. Integriertes Verfahren zur Hydrobehandlung und Hydroumwandlung von Gasölen, Vakuumdestillaten, atmosphärischen Reststoffen oder Vakuumreststoffen, das die Anlage nach einem der Ansprüche 1 bis 8 verwendet, bei dem die Trennungskolonne C-1 unter folgenden Bedingungen arbeitet: Gesamtdruck zwischen 0,4 MPa und 2,0 MPa, bevorzugt zwischen 0,6 und 2,0 MPa, besonders bevorzugt zwischen 0,7 und 1,8 MPa.

10. Integriertes Verfahren zur Hydrobehandlung und Hydroumwandlung von Kohlenwasserstoffchargen nach Anspruch 9, bei dem die die Fraktionierungskolonne C-2 unter folgenden Druckbedingungen arbeitet: Gesamtdruck zwischen 0,1 MPa und 0,4 MPa, vorzugsweise zwischen 0,1 MPa und 0,3 MPa.

11. Integriertes Verfahren zur Hydrobehandlung und Hydroumwandlung von Kohlenwasserstoffchargen nach Anspruch 9 oder 10, bei dem die Seitenstripping-Kolonne(n) C-4, C-5 und C-6 unter folgenden Druckbedingungen arbeitet(n): Gesamtdruck zwischen 0,1 MPa und 0,4 MPa, vorzugsweise zwischen 0,1 MPa und 0,3 MPa.

12. Integriertes Verfahren zur Hydrobehandlung und Hydroumwandlung von Kohlenwasserstoffchargen nach einem der Ansprüche 9 bis 11, bei dem die Betriebsbedingungen der katalytischen Reaktionen der Hydrobehandlung, Hydroumwandlung und Hydroisomerisation sind: Temperatur der Reaktionsabschnitte im Festbett zwischen 200 und 460 °C, durchschnittliche Temperatur des katalytischen Betts der Reaktionsabschnitte im Wallendbett zwischen 300 und 600 °C, vorzugsweise zwischen 350 °C und 510 °C, Gesamtdruck zwischen 1,5 MPa und 35 MPa, vorzugsweise zwischen 2 und 25 MPa, stündliche Gesamtraumgeschwindigkeit einer flüssigen Charge für jeden katalytischen Schritt zwischen 0,1 und 20, vorzugsweise zwischen 0,15 und 15, Wasserstoffmenge bezogen auf die flüssige Charge zwischen 50 und 2500 Nm³/m³.

13. Integriertes Verfahren zur Hydrobehandlung und Hydroumwandlung nach einem der Ansprüche 9 bis 12, bei dem die Kohlenwasserstoffcharge ausgewählt ist unter den Chargen des Typs atmosphärisches Destillat (Naphtha, Benzin, Kerosin und Gasöle), Vakuumdestillat, beispielsweise Gasöle, die aus der direkten Destillation des Rohstoffes oder von Umwandlungseinheiten, wie FCC, Verkokung oder Visbreaking stammen, wie LCO (light cycle oil) leichtes Gasöl, das aus einer katalytischen Cracking-Einheit stammt, den Chargen, die von aromatischen Extraktionseinheiten stammen, Basen von Schmieröl oder aus der Entparaffinierung mit Lösungsmittel der Basen von Schmieröl stammend, Destillaten, die von Entschwefelungs- oder Hydroumwandlungsverfahren im Festbett oder im Wallendbett von RAT (atmosphärischen Reststoffen) und/oder von RSV (Vakuumreststoffen) und/oder entasphaltierten Ölen stammen, den entasphaltierten Ölen, die Abflüssen aus einer Fischer-Tropsch-Einheit, den pflanzlichen Ölen allein oder im Gemisch oder den tierischen Ölen.

14. Integriertes Verfahren zur Hydrobehandlung und Hydroumwandlung nach Anspruch 13, bei dem die Kohlenwasserstoffcharge unter den Gasölen, den Vakuumdestillaten, den atmosphärischen Reststoffen oder Vakuumreststoffen oder den Abflüssen aus einer Fischer-Tropsch-Einheit ausgewählt ist.

## Claims

1. Installation for the hydrotreatment and hydroconversion of hydrocarbon-containing feedstocks, with a common fractionation section, for the production of at least one of the following products: naphtha (light and/or heavy), diesel, kerosene, distillate and residue, comprising at least:
- at least one first unit comprising:
• a first reaction section R-1 comprising at least one hydroconversion reactor;
• a hot high-pressure separator drum B-1, operating at a pressure comprised between 1.4 and 35 MPa and a temperature comprised between 200°C and 450°C, and comprising a line to be supplied with the effluent originating from the first reaction section R-1, and the liquid effluent of which is a heavy fraction of the effluent from the first reaction section R-1 ;
• a cold high-pressure separator drum B-2, operating at a pressure comprised between 1.3 and 35 MPa and a temperature comprised between 20°C and 100°C, and comprising a line to be supplied with the gaseous flow originating from the hot high-pressure separator drum B-1, and the liquid effluent of which is a light fraction of the effluent from the first reaction section R-1.
• a hot medium-pressure separator drum B-3, operating at a pressure comprised between 1 and 5 MPa and a temperature comprised between 200°C and 450°C, and comprising a line to be supplied with the liquid effluent originating from the hot high-pressure separator drum B-1, and the liquid effluent of which supplies the drum B-5;
• a cold medium-pressure separator drum B-4, operating at a pressure comprised between 1 and 5 MPa and a temperature comprised between 20°C and 100°C, and comprising a line to be supplied with the liquid effluent originating from the cold high-pressure separator drum B-2, and the gaseous fraction originating from the hot medium-pressure separator drum B-3 and the liquid effluent of which constitutes a feedstock of the common fractionation section;
• a hot low-pressure separator drum B-5, operating at a pressure comprised between 0.2 and 2.5 MPa and a temperature comprised between 200°C and 450°C, and comprising a line to be supplied with the liquid flow originating from the hot medium-pressure separator drum B-3, and the liquid effluent of which constitutes a feedstock of the common fractionation section.
- a second unit comprising:
• a second reaction section R-10 comprising at least one hydrotreatment reactor;
• a hot high-pressure separator drum B-10, operating at a pressure comprised between 1.4 and 35 MPa and a temperature comprised between 200°C and 450°C, and comprising a line to be supplied with the effluent originating from the second reaction section R-10, and the liquid effluent of which is a heavy fraction of the effluent from the reaction section R-10;
• a cold high-pressure separator drum B-20, operating at a pressure comprised between 1.3 and 35 MPa and a temperature comprised between 20°C and 100°C, and comprising a line to be supplied with any gaseous flow originating from the hot high-pressure separator drum B-10, or directly with the effluent originating from the second reaction section R-10, and the liquid effluent of which constitutes the light fraction or a mixture of the light fraction and the heavy fraction of the effluent from the second reaction section R-10 which supplies either a cold medium- or low-pressure separator drum or, directly, the common fractionation section.
• a hot medium-pressure separator drum B-30, operating at a pressure comprised between 1 and 5 MPa and a temperature comprised between 20°C and 100°C, the feedstock of which is the liquid flow originating from the hot high-pressure separator drum B-10,
• a cold medium-pressure separator drum B-40, operating at a pressure comprised between 1 and 5 MPa and a temperature comprised between 20°C and 100°C, and comprising a line to be supplied with the liquid flow originating from the cold high-pressure separator drum B-20, and a line to be supplied with the gaseous flow originating from the hot medium-pressure separator drum B-30, and the liquid effluent of which constitutes a feedstock of the common fractionation section
• a hot low-pressure separator drum B-50, operating at a pressure comprised between 0.2 and 2.5 MPa and a temperature comprised between 200°C and 450°C, and comprising a line to be supplied with the liquid flow originating from the hot medium-pressure separator drum B-30, and the liquid effluent and the vapour effluent of which constitute one or more feedstocks of the common fractionation section
- a common fractionation section comprising :
• at least one main fractionation column C-2, making it possible to separate a top fraction, an intermediate fraction and a heavy fraction, said fractions comprising the different products of the first and second units,
the supply of the flow or flows originating from the first unit and the supply of the flow or flows originating from the second unit to said common fractionation unit being separate;
• a separation column C-1, said separation column C-1 being separately supplied with:
- on the one hand, the liquid flow originating from the cold high-pressure separator drum B-2, and optionally the gaseous flow originating from the hot low-pressure separator drum B-5 of the first unit;
- on the other hand the liquid flow from the cold high-pressure separator drum B-20, and/or the liquid flow from the cold medium-pressure separator drum B-40, and/or the gaseous flow originating from the cold low-pressure separator drum B-50, of the second unit;
the main fractionation column C-2 being supplied with the liquid effluent from said separation column C-1, separately with the liquid flow originating from the hot low-pressure separator drum B-5 of the first unit, and with the liquid flow originating from the hot medium-pressure separator drum B-30 of the second unit.flow originating from the hot medium-pressure separator drum B-30 of the second unit.

2. Installation according to claim 1 in which the common fractionation section also comprises:
- at least one side-stripping column C-4, C-5 or C-6, supplied with one of the products of the intermediate fraction originating from the main fractionation column C-2: kerosene, diesel or residue, making it possible to separate a top gaseous fraction and a bottom liquid fraction,
- a pipe making it possible to send said top gaseous fraction to the main fractionation column C-2;
- an exchanger E4 for cooling said bottom liquid fraction of said side-stripping column;
- an outlet pipe for said cooled liquid fraction.

3. Installation according to one of claims 1 or 2, comprising a section for the treatment of acid gases C-7 comprising an amine absorber or a washing column operating at very low pressure, supplied with at least a part of the top fraction originating from the main fractionation column C-2 containing the residual acid gases.

4. Installation according to claims 1 to 3 comprising a section for the recovery of liquefied petroleum gases comprising one or more fractionation columns, supplied with at least a part of the top fraction originating from the main fractionation column C-2 containing the residual acid gases, or with the flow originating from the section for the treatment of the acid gases C7.

5. Installation according to one of the preceding claims, in which one or other of the reaction sections comprises a hydroisomerization section including a catalytic dewaxing unit, comprising at least one catalytic bed of catalyst comprising a zeolite, a hydrogenating/dehydrogenating function, and an acid function.

6. Installation according to one of the preceding claims, in which the first unit is a hydrocracking unit and the second unit a diesel hydrodesulphurization unit.

7. Installation according to one of claims 1 to 5, in which the first unit is a unit for the hydroconversion of residue or distillate or deasphalted oil in an ebullating bed, and the second unit is a unit for the hydrodesulphurization of vacuum distillate, or diesel or kerosene.

8. Installation according to claim 7, in which the first unit is a unit for the hydroconversion of deasphalted oil in an ebullating bed, and the second unit is a unit for the hydrodesulphurization of vacuum distillate.

9. Integrated process for the hydrotreatment and hydroconversion of gasoils, vacuum distillates, atmospheric or vacuum residues, using the installation according to one of claims 1 to 8, in which the separation column C-1 operates under the following conditions: total pressure comprised between 0.4 MPa and 2.0 MPa, preferably between 0.6 and 2.0 MPa, very preferably between 0.7 and 1.8 MPa.

10. Integrated process for the hydrotreatment and hydroconversion of hydrocarbon-containing feedstocks according to claim 9, in which the fractionation column C-2 operates under the following pressure conditions: total pressure comprised between 0.1 MPa and 0.4 MPa, preferably comprised between 0.1 MPa and 0.3 MPa.

11. Integrated process for the hydrotreatment and hydroconversion of hydrocarbon-containing feedstocks according to claim 9 or 10, in which the side-stripping column(s) C-4, C-5 and C-6 operate under the following pressure conditions: total pressure comprised between 0.1 MPa and 0.4 MPa, preferably comprised between 0.1 MPa and 0.3 MPa.

12. Integrated process for the hydrotreatment and hydroconversion of hydrocarbon-containing feedstocks according to one of claims 9 to 11 in which the operating conditions of the catalytic hydrotreatment, hydroconversion and hydoisomerization reactions are: a temperature of the fixed-bed reaction sections comprised between 200 and 460°C, an average temperature of the catalytic bed of the ebullating-bed reaction sections comprised between 300 and 600°C, preferably between 350°C and 510°C, a total pressure comprised between 1.5 and 35 MPa, preferably between 2 and 25 MPa, an overall hourly space velocity of liquid feedstock for each catalytic step comprised between 0.1 and 20, preferably comprised between 0.15 and 15, a quantity of hydrogen relative to the liquid feedstock comprised between 50 and 2500 Nm³/m³.

13. Integrated process for the hydrotreatment and hydroconversion according to one of claims 9 to 12 in which the hydrocarbon-containing feedstock is selected from feedstocks of the atmospheric distillate type (naphtha, gasoline, kerosene and gasoils), vacuum distillate, for example gasoils, originating from the direct distillation of crude or conversion units such as FCC, coker or visbreaking, such as LCO (light cycle oil) light oil originating from a catalytic cracking unit, the feedstocks originating from aromatic extraction units, lubricating oil bases or bases originating from solvent dewaxing of lubricating oil bases, the distillates originating from fixed-bed or ebullating-bed desulphurization or hydroconversion processes of ATR (atmospheric residues) and/or of VR (vacuum residues) and/or deasphalted oils, the deasphalted oils, effluents from a Fischer-Tropsch unit, the vegetable oils, alone or in a mixture, or animal fats.

14. Integrated hydrotreatment and hydroconversion process according to claim 13 in which the hydrocarbon-containing feedstock is selected from the gasoils, the vacuum distillates, the atmospheric or vacuum residues or the effluents from a Fischer-Tropsch unit.
